# EUROPEAN PATENT SPECIFICATION

(11) **EP 3 379 629 B1**
(45) Date of publication and mention of the grant of the patent: **19.07.2023**
(21) Application number: 16866305.2
(22) Date of filing: 15.11.2016
(51) Int. Cl.: H01M 8/1004, H01M 8/02, B29C 65/48, B32B 37/10, H01M 4/88, B32B 27/08, B32B 27/28, B32B 37/06, B32B 37/08, H01M 8/1018, H01M 8/1023, H01M 8/1025, H01M 8/1039, H01M 8/1086, H01M 8/10

(54) **METHOD AND DEVICE FOR MANUFACTURING ASSEMBLY THAT INCLUDES POLYMER ELECTROLYTE MEMBRANE**
VERFAHREN UND VORRICHTUNG ZUR HERSTELLUNG EINER ANORDNUNG, DIE EINE POLYMERELEKTROLYTMEMBRAN UMFASST
PROCÉDÉ ET DISPOSITIF DE FABRICATION D'UN ENSEMBLE COMPRENANT UNE MEMBRANE ÉLECTROLYTIQUE POLYMÈRE

(30) Priority: 19.11.2015 JP 2015226275
(43) Date of publication of application: 26.09.2018
(73) Proprietor: Toray Industries, Inc., Tokyo 103-8666 (JP)
(72) Inventor: ADACHI Shinya, Otsu-shi Shiga 520-8558 (JP); FUJIEDA Yuka, Otsu-shi Shiga 520-8558 (JP); IZUHARA Daisuke, Otsu-shi Shiga 520-8558 (JP); SHINTAKU Yuta, Otsu-shi Shiga 520-8558 (JP)
(74) Representative: Hoefer & Partner Patentanwälte mbB
(86) International application number: PCT/JP2016/083794
(87) International publication number: WO 2017/086304

(56) References cited:
- WO-A1-2011/111419
- JP-A- 2006 134 611
- JP-A- 2013 545 244
- US-A1- 2015 180 072

## Description

### Technical Field

The present invention relates to a method and a device for producing an assembly including a polymer electrolyte membrane, and more specifically, a method and a device for producing a catalyst coated membrane or a membrane-electrode assembly.

### Background Art

Fuel cells are a type of electric generator which extract electric energy by electrochemically oxidizing a fuel such as hydrogen or methanol, and they are recently attracting attention as a source of supply for clean energy. Of such fuel cells, solid polymer fuel cells generally have low operation temperature of around 100°C as well as high energy density. Accordingly, their application for a wide range of relatively small-scale distributed electric generator plants and electric generator devices of automobiles, ships, and other mobile units has become a focus of attention. Use as a power source for small mobile instrument and mobile devices is also receiving a wide attention, and their use on mobile phones and personal computers instead of secondary battery such as nickel hydrogen battery and lithium ion battery is highly awaited.

A fuel cell is typically constituted from units which are respectively a cell defined by a separator sandwiching a membrane-electrode assembly (MEA) constituted by electrodes, namely an anode and a cathode which are the site of the reaction generating the electric power and a polymer electrolyte membrane which is the proton conductor between the anode and the cathode. The production methods of the MEA are roughly categorized into two categories. In the method of the first category, a catalyst coated membrane (CCM) is first prepared by forming a catalyst layer on the surface of the polymer electrolyte membrane, and gas diffusion layers (GDL) are assembled on opposite surfaces of the CCM. In the method of the second category, a gas diffusion electrode (GDE) having a catalyst layer formed on the surface of the gas diffusion layer is first produced, and this GDE is assembled on opposite sides of the polymer electrolyte membrane.

New applications for the polymer electrolyte membranes have been developed in recent years particularly as materials for hydrogen infrastructure-related devices, and quality of the CCM and the MEA used in solid polymer electrolyte membrane-type water electrolysis device, electrochemical hydrogen pump, and the like have become an important issue in view of the durability and the performance reliability.

As an exemplary device or method for producing the CCM, Patent Document 1 discloses a method wherein the catalyst layer of the catalyst coated film is transferred to the electrolytic membrane by hot press or hot rollers. Patent Document 2 proposes a device for producing a composite material wherein the catalyst coated film and the preliminarily heated electrolyte membrane are subjected to hot press by using heated pressure application rollers to transfer the catalyst layer, and then cooled by cooling rollers simultaneously with the peeling of the film by peeling rollers.

However, the transfer by hot press as described in Patent Document 1 is incapable of accomplishing the continuous CCM production. The transfer by the hot rollers (heated pressure application rollers) described in Patent Documents 1 and 2, on the other hand, may be capable of conducting the continuous CCM production in roll form. However, the contact between the catalyst layer coated film and the electrolyte membrane with the hot rollers is linear contact, and such linear contact is incapable of uniformly applying the heat to the entire catalyst layer coated film and electrolyte membrane, and this resulted in the risk of warping of the CCM in the cooling stage after the heated pressure application by the hot rollers.
Conceivably, the same problems will be caused in the MEA if these methods were used for the MEA production by assembling the CCM with the GDL or by assembling the polymer electrolyte membrane with the GDE.

In the meanwhile, a method wherein an ion exchange membrane and an electrode substrate are assembled by applying heat or pressure by a double belt press using a belt made of steel or the like is proposed in Patent Document 3 as a method for producing a MEA.

In addition, as a method that can be used for either a CCM or a MEA, Patent Document 4 discloses a method for producing a CCM or a MEA comprising a heated pressure application step wherein heat and pressure are applied by using rollers or belts to a catalyst layer and an electrolyte membrane, or a gas diffusion layer and a catalyst layer-loaded electrolyte membrane that are in contact with each other; and a cooled pressure application step wherein pressure is applied while cooling the assembly.

Patent Document 5 teaches a membrane-electrode assembly producing apparatus and membrane-electrode assembly producing method, which can increase the bonding strength between a polymer electrolyte film and a catalyst layer and which can produce a high-quality membrane-electrode assembly without a formation of wrinkle through a hot roll technique. The apparatus includes a pre-heating unit for pre-heating a catalyst-layer supporting base material that supports the catalyst layer on a surface of a transfer base material, and the polymer electrolyte film, a thermal pressure bonding unit for heating and pressing the catalyst-layer supporting base material and the polymer electrolyte film to form an integrated joined member, and a peeling unit for peeling the transfer base material from the joined member.

Patent Document 6 discloses a manufacturing device and a manufacturing method of a junction having high productivity capable of preventing warp of the junction. The manufacturing device of junction manufacturing a junction of catalyst layer and electrolyte film or of diffusion layer and a catalyst layer carrying electrolyte layer comprises a heating/pressing means forming the junction by continuously transferring a transfer layer on a base material by heating and pressing a carrying base material, carrying a plurality of transfer layers which are either the catalyst layers or the diffusion layers on one face, and a base material composed of a layer to be transported, which is either the electrolyte film or the catalyst layer carrying electrolyte layer, in a state where the transfer layer is made to contact with the layer to be transferred; and a cooling/pressing means continuously cooling and pressing the junction.

Patent Document 7 teaches a manufacturing system and method of a membrane electrode assembly (MEA) for a fuel cell, which increases performance and durability of an MEA and ensures productivity of the MEA. In particular, electrodes and an electrolyte membrane are bonded together and the membrane electrode assembly manufactured in the bonding process is pressed at a predetermined temperature.

### Prior Art Documents

### Patent Documents

Patent Document 1: Japanese Unexamined Patent Publication (Kokai) No. H10-64574
Patent Document 2: Japanese Unexamined Patent Publication (Kokai) No. 2001-196070
Patent Document 3: Published Japanese Translation of PCT International Publication JP No. 2004-528696
Patent Document 4: Japanese Unexamined Patent Publication (Kokai) No. 2006-134611

### Summary of the Invention

Patent Document 5: WO 2011/111419 A1
Patent Document 6: JP 2006-134611 A
Patent Document 7: US 2015/180072 A1

### Problems to Be Solved by the Invention

In the method using a double belt press as in the case of Patent Document 3 and a method using rollers and belts as in the case of Patent Document 4, contact between the catalyst layer-carrying film and the electrolyte membrane with the belt was surface contact and this contributed to the slight improvement in the warping of the CCM or the MEA. However, these methods still suffered from the problems of wrinkles of the electrolyte membrane and uneven assembly.

An object of the present invention is to continuously produce an assembly including a polymer electrolyte membrane while preventing the generation of warping, wrinkles of the electrolyte membrane, and uneven assembly.

### Means for Solving the Problems

For the purpose of solving the problems as described above, the present invention, which is defined in the appended claims, provides a method for producing an assembly including a polymer electrolyte membrane comprising a step of preliminary pressure application wherein a pressure is continuously applied to a recipient sheet including a polymer electrolyte membrane and an assembling sheet including an assembling layer, the pressure being applied to the recipient sheet and the assembling layer of the assembling sheet being in contact with each other; and a step of heated pressure application wherein the recipient sheet and the assembling sheet after the preliminary pressure application step are subjected to continuous pressure application with heating, wherein average temperature elevation rate of the recipient sheet and the assembling sheet in the preliminary pressure application step is up to 20°C/sec, the method further comprising a step of pressure application with cooling wherein the assembly assembled in the heated pressure application step is continuously subjected to pressure application with cooling, wherein the preliminary pressure application step, the heated pressure application step, and the cooled pressure application step are continuously conducted in one double belt pressure application mechanism.

The polymer electrolyte membrane used in the method for producing an assembly including a polymer electrolyte membrane of the present invention is not particularly limited as long as it has proton conductivity and it functions as a solid polymer electrolyte membrane for a fuel cell. It may be a known or commercially available polymer electrolyte membrane and exemplary such membranes include electrolyte membranes comprising a perfluorosulfonic acid such as "Nafion" (Registered Trademark) manufactured by DuPont, "Flemion" (Registered Trademark) manufactured by ASAHI GLASS CO., LTD., "Aciplex" (Registered Trademark) manufactured by Asahi Kasei Corporation, and "GORE-SELECT" (Registered Trademark) manufactured by Gore. Also included are polymer electrolyte membranes comprising a hydrocarbon polymer having a hydrocarbon skeleton provided with proton conductivity. Exemplary such hydrocarbon polymers include aromatic hydrocarbon polymers having an aromatic ring in the backbone such as polysulfone, polyether sulfone, polyphenylene oxide, polyarylene ether polymer, polyphenylene sulfide, polyphenylene sulfide sulfone, polyparaphenylene, polyarylene polymer, polyarylene ketone, polyetherketone, polyarylene phosphine oxide, polyether phosphine oxide, polybenzoxazole, polybenzthiazole, polybenzimidazole, aromatic polyamide, polyimide, polyetherimide, and polyimide sulfone.

"Polyether sulfone" is a generic name for polymers having sulfone bond in their molecular chain, and "polyetherketone" is a generic name for polymers having ether bond and ketone bond in their molecular chain including polyetherketone ketone, polyether ether ketone, polyether ether ketone ketone, polyetherketone ether ketone ketone, polyether ketone sulfone, not limited to specific polymer structures.

Of these polymers, polymers such as polysulfone, polyether sulfone, polyphenylene oxide, polyarylene ether polymer, polyphenylene sulfide, polyphenylene sulfide sulfone, polyarylene ketone, polyetherketone, polyarylene phosphine oxide, and polyether phosphine oxide are preferable for use in view of mechanical strength, physical durability, workability, and resistance to hydrolysis.

More specifically, when the electrolyte membrane is the one comprising an aromatic hydrocarbon polymer, drying of the surface of the electrolyte membrane or the catalyst coated membrane will be significant when the pressure is applied with high temperature heating from the start in the production of the assembly including a polymer electrolyte membrane, and this drying may result in the uneven transfer of the catalyst layer, uneven assembly of the gas diffusion layer, and wrinkling, and accordingly, use of the production method and the production device of the present invention is preferable.

The production method and the production device of the present invention can be widely used in the production of the assembly including a polymer electrolyte membrane, and their use is particularly suitable for the production of CCM and MEA. The recipient sheet is a sheet including a polymer electrolyte membrane, and it may be the polymer electrolyte membrane itself. The "assembling layer" is the layer which is to be assembled to at least one surface of the recipient sheet, and the assembling sheet is the sheet including such assembling layer before the transfer to the recipient sheet. For example, in the production of the CCM, the recipient sheet is a polymer electrolyte membrane, the assembling sheet is a catalyst transfer sheet, and the assembling layer is the catalyst layer of the catalyst transfer sheet. In the production of the MEA, the recipient sheet is the CCM, the assembling sheet is the GDL, and the assembling layer is the GDL, or alternatively, the recipient sheet is the polymer electrolyte membrane, the assembling sheet is the GDE, and the assembling layer is the GDE. Examples of the GDL include carbon paper, carbon cloth, and carbon felt, and also, any of such material subjected to water repellency treatment.

The production method and the production device of the present invention is not limited to the production of a CCM or a MEA, and they may be generally used in the transfer of other layer to the sheet including the polymer electrolyte membrane or in the assembly of other sheet with the sheet including the polymer electrolyte membrane. For example, the production method and the production device of the present invention can be used in the transfer or assembling of additional layer in the course of producing the CCM or the MEA or in further assembling of a reinforcement layer to the MEA. The use of the production method and the production device of the present invention is also preferable, for example, in the assembling of the polymer electrolyte membrane or the CCM with the frame material to produce an assembly wherein the polymer electrolyte membrane or the CCM is assembled with the frame material; in the assembly of the polymer electrolyte membrane or the CCM already having the frame material assembled therewith with the GDL to produce the MEA; in the assembling of the GDL having the frame material already assembled therewith with the polymer electrolyte membrane or the CCM to produce the MEA.

It is to be noted that the "frame material" is a member which covers at least a part of the peripheral part of the polymer electrolyte membrane. Such frame material is generally incorporated in an assembly for the purpose of improving the handling convenience of the electrolyte membrane or preventing generation of the damages by direct contact of the electrolyte membrane with the gas diffusion layer. While the frame material is typically a frame-shaped member that covers four edges of the polymer electrolyte membrane, the flame member may also be the one covering only two edges of the polymer electrolyte membrane prepared by using a long member. In order to assemble the frame material with the long polymer electrolyte membrane used in the continuous production process, use of a frame material in the form of a long sheet matching the size of the polymer electrolyte membrane from which the unnecessary interior part has been cut out to enable selective covering of the edge parts is preferable. An assembly provided with such frame material can be prepared by assembling the frame material with the polymer electrolyte membrane and cutting the assembly.

In the production method of the present invention, a preliminary pressure application step is first conducted so that a pressure is continuously applied while the recipient sheet and the assembling layer of the assembling sheet are in contact with each other. The preliminary pressure application step is a step wherein the continuous pressure application is conducted at a temperature below the Tg of the polymer having the lowest glass transition temperature (Tg) in the polymers constituting the polymer electrolyte membrane. When a polymer electrolyte membrane solely comprising a polymer with unclear Tg is used, the preliminary pressure application step is a step wherein the continuous pressure application is conducted at a temperature below the temperature of deflection under load. In this description, the Tg of the polymer having the lowest Tg in the polymers constituting the polymer electrolyte membrane, or the HDT of the polymer electrolyte membrane when the polymer electrolyte membrane solely comprises a polymer with unclear Tg is hereinafter referred to as the "electrolyte membrane-denaturing temperature".

In the preliminary pressure application step, the average temperature elevation rate of the recipient sheet and the assembling sheet is set at a rate of up to 20°C/second. The average temperature elevation rate in the preliminary pressure application step is preferably up to 15°C/second and more preferably up to 10°C/second. When the preliminary pressure application step is conducted at least for 5 seconds, the temperature elevation rate at 5 seconds after the beginning of the preliminary pressure application step is preferably set at up to 20°C/second, more preferably at up to 15°C/second, and still more preferably at up to 10°C/second, and the temperature elevation rate at any timing from the start to the end of the preliminary pressure application step is preferably set at up to 20°C/second, more preferably at up to 15°C/second, and still more preferably at up to 10°C/second. When the temperature elevation rate is set as described above, generation of voids and wrinkles on the CCM surface by the rapid evaporation of the volatile contents such as water in the polymer electrolyte membrane or the catalyst layer will be reduced. It is to be noted that the average temperature elevation rate is measured by placing a temperature element on the laminate of the recipient sheet and the assembling sheet or the test sheet resembling such laminate undergoing the preliminary pressure application step.

The material constituting the polymer electrolyte membrane or the assembling layer typically contains some moisture. When heat at 100°C or higher is suddenly applied to such moisture with some pressure in this state, wrinkles or warping may be generated in the polymer electrolyte membrane or the assembly by the rapid evaporation of the water. Accordingly, heating in the preliminary pressure application step is preferably started from a temperature less than 100°C, and more preferably, the state at less than 100°C is continued for at least 1 second, and preferably for at least 5 seconds.

The pressure application time in the preliminary pressure application step is not particularly limited. However, the pressure application time is preferably at least 0.1 second and up to 30 minutes. When the pressure application time is less than 0.1 second, sufficient provisional securing of the recipient sheet and the assembling sheet will not be established, and the polymer electrolyte membrane may become more susceptible to wrinkle generation. When the pressure application time is in excess of 30 minutes, the very long processing time may result in the reduced productivity. The pressure application time in the preliminary pressure application step is more preferably at least 1 second and up to 10 minutes, and more preferably at least 1 second and up to 1 minute, and still more preferably at least 5 seconds and up to 20 seconds.

In the preliminary pressure application step, the pressure applied to the recipient sheet and the assembling sheet is preferably 0.15 to 10 MPa. When the pressure is less than 0.15 MPa, the recipient sheet and the assembling sheet will be in contact with each other while they will not be completely adhered, and the polymer electrolyte membrane may become more susceptible to wrinkle generation. When the pressure is in excess of 10 MPa, excessive pressure will be applied to the polymer electrolyte membrane, and increased damage of the polymer electrolyte membrane may result in the reduced durability of the assembly. The pressure in the preliminary pressure application step is more preferably at least 0.5 MPa and up to 7.0 MPa.

The recipient sheet and the assembling sheet after the preliminary pressure application step are then subjected to a heated pressure application step wherein the pressure is continuously applied to these sheets with heating. The heated pressure application is a step wherein the pressure is continuously applied while elevating the temperature of the recipient sheet and assembling sheet to a temperature not below the electrolyte membrane-denaturing temperature which is a temperature higher than the temperature in the preliminary pressure application step.

The pressure application time in the heated pressure application step is not particularly limited, and the pressure application time is preferably at least 0.1 second and up to 10 minutes. When the pressure application time is less than 0.1 second, there is a risk that the assembling layer may not be sufficiently transferred to the recipient sheet. When the pressure application time is in excess of 10 minutes, the polymer electrolyte membrane may suffer from thermal damages. The pressure application time in the heated pressure application step is more preferably at least 1 second and up to 5 minutes, more preferably at least 1 second and up to 1 minute, and still more preferably at least 1 second and up to 20 seconds.

The pressure applied to the recipient sheet and the assembling sheet in the heated pressure application step may be any pressure, and preferably a pressure in the range of 0.15 to 10 MPa. When the pressure is less than 0.15 MPa, there is a risk that the assembling layer is not sufficiently transferred to the recipient sheet. When the pressure is in excess of 10 MPa, the excessive pressure applied to the polymer electrolyte membrane may result in the increased damages of the polymer electrolyte membrane, and hence, in the reduced durability. The pressure in the heated pressure application step is more preferably at least 0.5 MPa and up to 7.0 MPa, and the pressure in the heated pressure application step is preferably set at a pressure substantially the same as the pressure in the preliminary pressure application step.

The pressure application in the preliminary pressure application step and the heated pressure application step is preferably conducted by surface contact or by a plurality of linear contacts. It is to be noted that, in the present invention, an embodiment wherein the pressure-applying member and the pressure-receiving sheet are in contact with each other along a single line as in the case of the pressure application by a pair of rollers is referred to as the "linear contact", and the embodiment wherein the pressure-applying member and the pressure-receiving sheet are in contact with each other along a plane with certain width extending in the conveying direction as in the case of the pressure application by a double belt pressure application mechanism is referred to as the "surface contact", and furthermore, the embodiment wherein the pressure application is conducted by a plurality of "linear contacts" as in the case of the pressure application by two or more pairs of rollers is referred to as the "a plurality of linear contacts". Of these, the pressure application in the preliminary pressure application step and/or the heated pressure application step is most preferably accomplished by the surface contact. In this case, the contact width between the pressure-receiving sheet and the pressure-applying member is not particularly limited, and the width can be adequately determined according to the size of the electrolyte membrane produced. Generally, the contact is preferably accomplished along the conveying direction at a width of at least 30 cm. An exemplary mechanism wherein the contact is accomplished by surface contact is a double belt pressure application mechanism wherein the recipient sheet and the assembling sheet are sandwiched from opposite directions by conveyer belts. An exemplary mechanism wherein the contact is accomplished by a plurality of linear contacts is a roller mechanism comprising two or more pairs of rollers.

In the preliminary pressure application step and the heated pressure application step, the pressure application is preferably conducted at a constant pressure. The "constant pressure" means that a substantially uniform pressure is loaded to the contact plane with no pressure variation in the direction perpendicular to the conveying direction. The pressure variation in the plane of pressure application in each step is not particularly limited as long as a substantially uniform pressure is applied, while the pressure variation is preferably up to 0.1 MPa.

More particularly, the preliminary pressure application step and the heated pressure application step are preferably continued so that the pressure application to the recipient sheet and the assembling sheet is maintained. In other words, the preliminary pressure application step and the heated pressure application step are conducted so that the pressure application is not interrupted between the two steps. In such case, it is more preferable that the preliminary pressure application step and the heated pressure application step are continuously conducted at the same constant pressure. When the preliminary pressure application step and the heated pressure application step are conducted by using a double belt pressure application mechanism, the two steps are preferably continued in the same double belt pressure application mechanism.

The assembly assembled in the heated pressure application step is further subjected to a cooled pressure application step wherein pressure is continuously applied to the assembly with cooling. The cooled pressure application step is a step wherein the pressure is continuously applied to the assembly after the heated pressure application step while the temperature of the assembly is cooled to a temperature below the electrolyte membrane-denaturing temperature which is below the temperature in the heated pressure application step. The pressure application in the cooled pressure application step may be conducted in the same manner as the preliminary pressure application step and the heated pressure application step as described above.

In the cooled pressure application step, the pressure application is preferably conducted at a constant pressure, and preferably, the pressure in the cooled pressure application step is set at a pressure substantially the same as the heated pressure application step. In other words, the pressure application in all of the preliminary pressure application step, the heated pressure application step, and the cooled pressure application step is preferably conducted by applying the same force.

The pressure application time in the cooled pressure application step is not particularly limited while the pressure application time is preferably at least 1 second and up to 50 minutes. When the pressure application time is less than 1 second, the polymer electrolyte membrane is rapidly cooled and the rapid cooling may result in the disturbance of the boundary between the polymer electrolyte membrane and the assembling layer. When the pressure application time is in excess of 50 minutes, the excessively long time that took for the cooling may result in the damages by the heat. The pressure application time in the cooled pressure application step is more preferably at least 1 second and up to 10 minutes, and still more preferably at least 1 second and up to 1 minute.

In the cooled pressure application step, the pressure applied to the polymer electrolyte membrane and the assembly is preferably 0.15 to 10 MPa. When the pressure is less than 0.15 MPa, control of the difference in the stress strain caused by the cooling between the polymer electrolyte membrane and the assembling layer will be difficult, and this may invite peeling at the boundary due to the strain at the interface and generation of wrinkles after removing the pressure. When the pressure is in excess of 10 MPa, excessive pressure will be applied to the polymer electrolyte membrane with increased damages to the polymer electrolyte membrane and the catalyst layer, and this may result in the reduced durability. The pressure in the cooled pressure application step is more preferably at least 0.5 MPa and up to 7.0 MPas.

The heated pressure application step and the cooled pressure application step are continuously conducted with the pressure being continuously applied to the assembly. In other words, these steps are conducted so that the pressure is not removed from the assembly during its movement from the heated pressure application step to the cooled pressure application step, and the preliminary pressure application step, the heated pressure application step, and the cooled pressure application step are continuously conducted while the recipient sheet and the assembling sheet or the resulting assembly obtained by assembling these sheets are kept under the pressure. The preliminary pressure application step, the heated pressure application step, and the cooled pressure application step are conducted by a double belt pressure application mechanism, wherein these steps are continuously conducted in the same double belt pressure application mechanism.

It is to be noted that the foregoing description is the one for the production method of the present invention. As readily understood from the foregoing description and the following description of the embodiments, the present invention also discloses the production device as described below for conducting the production method as described above.
(1) A device for producing an assembly including a polymer electrolyte membrane comprising
   a preliminary pressure application section capable of continuously applying a pressure to a recipient sheet including a polymer electrolyte membrane and an assembling sheet including an assembling layer which is to be assembled to at least one surface of the recipient sheet, the recipient sheet and the assembling layer of the assembling sheet being in contact with each other, and
   a heated pressure application section, capable of subjecting the recipient sheet and the assembling sheet after the preliminary pressure application step to continuous pressure application with heating,

   wherein average temperature elevation rate of the recipient sheet and the assembling sheet in the preliminary pressure application section is set at a rate of up to 20°C/sec,
   the device further comprising a cooled pressure application section capable of continuously subjecting the assembly assembled in the heated pressure application step to pressure application with cooling,
   wherein the preliminary pressure application section, the heated pressure application section, and the cooled pressure application section are respectively constituted as a part of an integral double belt pressure application mechanism.

(3) A device for producing an assembly including a polymer electrolyte membrane according to (1) wherein the preliminary pressure application section and the heated pressure application section are respectively constituted as a part of an integral double belt pressure application mechanism.

### Advantageous Effect of the Invention

The present invention is capable of producing an assembly including a polymer electrolyte membrane such as CCM and MEA while preventing the generation of warping, wrinkles of the electrolyte membrane, and uneven assembly.

### Brief Description of the Drawings

[FIG. 1] FIG. 1 is a schematic view showing first embodiment of the CCM production device not falling under the scope of the present invention.
[FIG. 2] FIG. 2 is a schematic view showing second embodiment of the CCM production device not falling under the scope of the present invention.
[FIG. 3] FIG. 3 is a schematic view showing third embodiment of the CCM production device according to an aspect of the present invention.
[FIG. 4] FIG. 4 is a schematic view showing fourth embodiment of the CCM production device according to an aspect of the present invention.
[FIG. 5] FIG. 5 is a schematic view showing the CCM production device and the MEA production device used in Comparative Example 1-1 and Comparative Example 2-1.
[FIG. 6] FIG. 6 is a schematic view showing the CCM production device and the MEA production device used in Comparative Example 1-2 and Comparative Example 2-2.
[FIG. 7] FIG. 7 is a schematic view showing the MEA production device not falling under the scope of the present invention. Description of Preferred Embodiments

Next, the present invention is described by referring to embodiments which are presented to facilitate understanding of the invention and which by no means limit the scope of the invention. The description of individual embodiment should be understood as the description of the production method or production device of the present invention corresponding to generic concepts.

### <Production method and production device of CCM>

First, the method and device for producing a catalyst coated membrane (CCM) having a catalyst layer formed on the polymer electrolyte membrane according to an embodiment of the present invention is described. In this embodiment, the recipient sheet or receiving sheet including a polymer electrolyte membrane is a polymer electrolyte membrane itself, the assembling layer or joining layer is a catalyst layer, and the assembling sheet or joining sheet is a catalyst transfer sheet. It is to be noted that the "assembling layer" is a layer assembled on at least one surface of the recipient sheet, and the "catalyst transfer sheet" is a sheet having a catalyst layer on the substrate which is used in the transfer of the catalyst layer to the polymer electrolyte membrane.

### [First embodiment] - not falling under the scope of the present invention

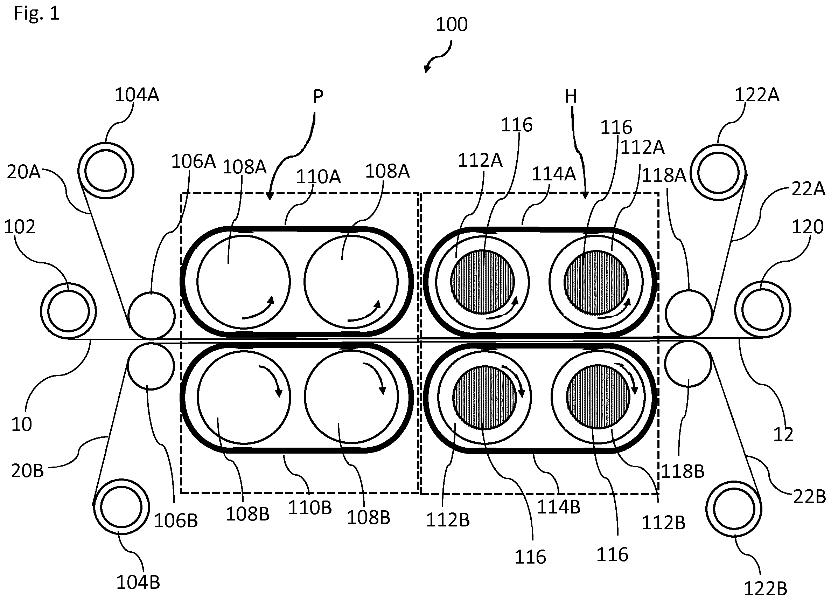

FIG. 1 shows CCM production device 100 according to the first embodiment, and in this CCM production device 100, the preliminary pressure application step is conducted as described below. It is to be noted that, in the present description, the upper direction of each figure is referred to as the "upper" and the lower direction of each figure is referred to as the "lower" for the purpose of convenience while the "upper" and "lower" do not necessarily correspond to the direction vertical to the ground.

First, an electrolyte membrane-supplying roller 102 unwinds and supplies a polymer electrolyte membrane 10. Catalyst transfer sheet-supplying roller 104A and 104B are respectively provided on the upper and lower side of the unwound polymer electrolyte membrane 10. Catalyst transfer sheet 20A for forming a catalyst layer on the upper surface of the polymer electrolyte membrane 10 is unwound and supplied from the catalyst transfer sheet-supplying roller 104A and catalyst transfer sheet 20B for forming a catalyst layer on the lower surface of the polymer electrolyte membrane 10 is unwound and supplied from the catalyst transfer sheet-supplying roller 104B so that the surface carrying the catalyst layer faces against the polymer electrolyte membrane 10. As described above, in the CCM production device 100 according to the first embodiment, the catalyst later (assembling layer) is transferred to opposite surfaces of the polymer electrolyte membrane 10 (recipient sheet), and in other words, opposite surfaces of the polymer electrolyte membrane 10 are the recipient surfaces. This embodiment, however, may be constituted so that the catalyst layer is transferred to only one surface of the polymer electrolyte membrane 10.

The thus supplied electrolyte membrane 10 and the catalyst transfer sheets 20A and 20B pass between guide rollers 106A and 106B, and the guide rollers 106A and 106B convey the supplied polymer electrolyte membrane 10 and the catalyst transfer sheets 20A and 20B by their rotation while sandwiching them in between. Positioning of the polymer electrolyte membrane 10 and the catalyst transfer sheets 20A and 20B is accomplished in this stage with the catalyst transfer sheet 20A contacting the upper surface of the polymer electrolyte membrane 10 and the catalyst transfer sheet 20B contacting the lower surface of the polymer electrolyte membrane 10.

The thus positioned polymer electrolyte membrane 10 and catalyst transfer sheets 20A and 20B in contact with each other are conveyed to preliminary pressure application section P. In this embodiment, the preliminary pressure application section P is a double belt pressure application mechanism constituted from an upper belt mechanism having conveyer belt 110A circulating around two drums 108A and a lower belt mechanism having conveyer belt 110B circulating around two drums 108B, the lower belt mechanism being arranged under the upper belt mechanism to face against the upper belt mechanism. The polymer electrolyte membrane 10 and the catalyst transfer sheets 20A and 20B sandwiched between the upper belt mechanism and the lower belt mechanism are conveyed with the force being applied from the upper and lower sides, and the pressure is continuously applied by surface contact and they become provisionally fixed.

Since neither one of the upper belt mechanism and the lower belt mechanism have heating means, pressure application in the preliminary pressure application section P will be conducted at a temperature below the pressure application in the heated pressure application section H. It is to be noted that, in this embodiment, the double belt pressure application mechanism in the heated pressure application section P has no heating means. However, this section may have a heating means for heating to a temperature lower than the electrolyte membrane-denaturing temperature, namely, the Tg of the polymer constituting the polymer electrolyte membrane 10 or HDT of the polymer electrolyte membrane 10.

When a heat not below the electrolyte membrane-denaturing temperature is applied before the provisional securing of the polymer electrolyte membrane 10 and the catalyst transfer sheets 20A and 20B by the preliminary pressure application, wrinkles of the polymer electrolyte membrane 10 or the catalyst layer are generated to detract from the quality of the CCM. These wrinkles also results in the defect sites of the CCM, and the MEA produced by using such CCM may suffer from the reduced durability of the MEA. Furthermore, when a heat not below the electrolyte membrane-denaturing temperature is applied to the polymer electrolyte membrane 10 before the provisional securing, denaturing of the polymer electrolyte membrane 10 or the catalyst layer by the heat starts before the adhesion of the polymer electrolyte membrane 10 and the catalyst transfer sheets 20A and 20B. In such as case, formation of good boundary between the polymer electrolyte membrane 10 and the catalyst layer may become difficult, and this may result in the slightly poor electric generation performance.

Temperature of the polymer electrolyte membrane and the catalyst transfer sheets during passage through the preliminary pressure application section should be adequately set depending on the properties including the Tg of the polymer electrolyte membrane and the catalyst layer used, as long as it is a temperature below the electrolyte membrane-denaturing temperature, and a temperature below the temperature in the heated pressure application section H as described below. Typical, the temperature is preferably less than 100°C, and more preferably at least 5°C and less than 80°C. When this temperature is at least 80°C, the surface of the polymer electrolyte membrane 10 will dry simultaneously with the pressure application and wrinkle generation is likely to be accelerated. In the meanwhile, when the temperature is less than 5°C, surface flexibility of the electrolyte membrane will be lost, and the boundary between the catalyst layer and the electrolyte membrane will be disturbed to invite an uneven transfer. Accordingly, the temperature of the polymer electrolyte membrane and the catalyst transfer sheet upon passage through the preliminary pressure application section is preferably at least 20°C and less than 80°C. In the preliminary pressure application section, it is also preferable that the temperature change compared with the temperature of the polymer electrolyte membrane before its entrance into the preliminary pressure application section is preferably up to 30°C. In addition, the temperature elevation rate of the polymer electrolyte membrane and the catalyst transfer sheet in the preliminary pressure application step is preferably controlled as described above.

Next, the polymer electrolyte membrane and the catalyst transfer sheets after the preliminary pressure application step are subjected to heated pressure application step wherein they are continuously subjected to pressure application with heating. In this embodiment, the preliminary pressure application section and the heated pressure application section are constituted from separate double belt pressure application mechanisms, and therefore, the polymer electrolyte membrane and the catalyst transfer sheets are temporarily liberated from the pressure when they move from the heated pressure application step to the cooled pressure application step.

In the CCM production device 100 shown in FIG. 1, the heated pressure application step is conducted as described below.

The polymer electrolyte membrane 10 and the catalyst transfer sheets 20A and 20B which have been provisionally secured in the preliminary pressure application section P are conveyed on the line to the heated pressure application section H. In the present embodiment, the heated pressure application section H comprises a double belt pressure application mechanism comprising an upper belt mechanism having a conveyer belt 114A circulating around two drums 112A, and a lower belt mechanism having a conveyer belt 114B circulating around two drums 112B, the lower belt mechanism being arranged under the upper belt mechanism to face against the upper belt mechanism.

The difference of this double belt pressure application mechanism with that of the preliminary pressure application section P is that the drums 112A and 112B have a heating means 116. The provisionally secured polymer electrolyte membrane 10 and the catalyst transfer sheets 20A and 20B are not only subjected to the continuous pressure by the upper belt mechanism and lower belt mechanism through surface contact, but they are also heated to a temperature not below the electrolyte membrane-denaturing temperature by the heat from the heating means 116. In this process the catalyst layer of the catalyst transfer sheets 20A and 20B is respectively transferred to upper and lower surfaces of the polymer electrolyte membrane 10. In other words, the polymer electrolyte membrane 10 that had passed the heated pressure application section H becomes the catalyst coated electrolyte membrane (CCM) 12, and the substrates 22A and 22B will be left after the removal of the catalyst layers from the catalyst transfer sheets 20A and 20B.

The heating means may be a heater, a heat medium such as steam or oil, or the like, and the one used is not particularly limited. The drums, the pressure application section as described below, the conveyer belt, and the like constituting the double belt pressure application mechanism as the heated pressure application section H, are preferably formed from a material having a high thermal capacity and thermal conductivity such as copper and stainless steel.

The maximum temperature of the polymer electrolyte membrane during its passage through the heated pressure application section H should be adequately set depending on the properties of the polymer electrolyte membrane and the catalyst layer used, as long as it is a temperature not below the electrolyte membrane-denaturing temperature and a temperature allowing the transfer of the catalyst layer to the polymer electrolyte membrane . Preferably, the maximum temperature is typically at least 100°C and up to 200°C. When this temperature is less than 100°C, sufficient transfer of the catalyst layer to the polymer electrolyte membrane may not be accomplished while the temperature in excess of 200°C may result in the damage of the polymer electrolyte membrane. The temperature of the polymer electrolyte membrane and the catalyst transfer sheet immediately after passing the heated pressure application section is more preferably at least 120°C and up to 180°C.

The CCM 12 after passing through the heated pressure application section H then passes between guide rollers 118A and 118B, and the CCM 12 is wound up in the form of a roll by CCM winding roller 120. In the meanwhile, the substrates 22A and 22B are wound up in the form of rolls by substrate-winding rollers 122A and 122B.

In the embodiment as described above, both of the preliminary pressure application section and the heated pressure application section are a double belt pressure application mechanism wherein the pressure application to the catalyst transfer sheet is accomplished by surface contact, while the mechanism is not particularly limited. The preliminary pressure application section may be a roller mechanism wherein the pressure application to the catalyst transfer sheet is conducted by a single roller or a plurality of rollers by linear contact or by a plurality of linear contacts, and the heated pressure application section may be a hot roller mechanism wherein the pressure application to the catalyst transfer sheet is conducted by a single pair of rollers or a plurality of pairs of rollers having a heating means by linear contact or by a plurality of linear contacts. When two or more pairs of rollers are used, the number of the rollers provided is preferably 2 to 10 pairs although the number is not particularly limited.

### [Second embodiment] - not falling under the scope of the present invention

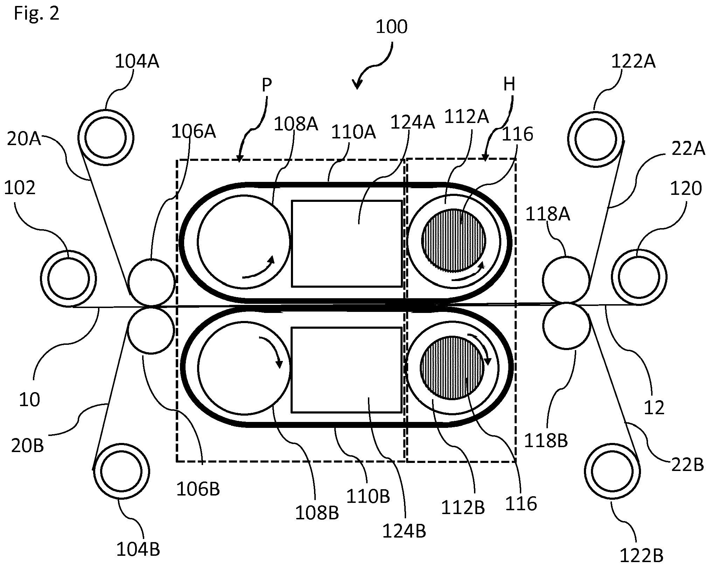

Next, CCM production device 100 according to the second embodiment shown in FIG. 2 and production method of the CCM using this device are described by featuring the difference from the CCM production device shown in FIG. 1.

In the CCM production device 100 shown in FIG. 2, the polymer electrolyte membrane 10 and the catalyst transfer sheets 20A and 20B which have been positioned with each other by the guide rollers 106A and 106B and which are in contact with each other are conveyed to the double belt pressure application mechanism constituted from an upper belt mechanism having a conveyer belt 110A circulating around two drums 108A and 112A and a lower belt mechanism having conveyer belt 110B circulating around two drums 108B and 112B, the lower belt mechanism being arranged under the upper belt mechanism to face against the upper belt mechanism.

Since neither one of the drums 108A and the 108B have heating means, the polymer electrolyte membrane 10 and the catalyst transfer sheets 20A and 20B will be continuously subjected to pressure application by surface contact without heating while they pass between the drums 108A and the 108B, being sandwiched between the upper belt mechanism and the lower belt mechanism with the force applied from both upper and lower direction.

The CCM production device 100 according to this embodiment has a pressure application section 124A between the drum 108A and the drum 112A as a part of the upper belt mechanism, and similarly, a pressure application section 124B between the drum 108B and the drum 112B as a part of the lower belt mechanism. The pressure application section 124A presses the conveyer belt 110A in the downward direction, and the pressure application section 124B presses the conveyer belt 110B in the upward direction. Accordingly, during the passage between the pressure application section 124A and 124B, the polymer electrolyte membrane 10 and the catalyst transfer sheets 20A and 20B are continuously pressed by surface contact without heating, being sandwiched between the upper belt mechanism and the lower belt mechanism with the force applied from both upper and lower direction. In other words, in this embodiment, the preliminary pressure application section P comprises a pair of drums 108A and 108B which are not provided with the heating means, the pressure application sections 124A and 124B, and the conveyer belts 110A and 110B which are a part of the double belt pressure application mechanism. The polymer electrolyte membrane 10 and the catalyst transfer sheets 20A and 20B are provisionally secured by the passage through the preliminary pressure application section P.

Next, the provisionally secured polymer electrolyte membrane 10 and the catalyst transfer sheets 20A and 20B are conveyed with the pressure being applied by the double belt pressure application mechanism until they arrive at the position between the drum 112A and drum 112B which are both provided with the heating means 116. Accordingly, during passage between the drum 112A and the 112B, the polymer electrolyte membrane 10 and the catalyst transfer sheets 20A and 20B continuously receive a pressure by surface contact with the heating to a temperature not below the electrolyte membrane-denaturing temperature, being sandwiched between the upper belt mechanism and the lower belt mechanism with the force applied from both upper and lower direction.

In this embodiment, the heated pressure application section comprises a pair of drums 112A and 112B provided with the heating means 116 and the conveyer belts 110A and 110B which are a part of the double belt pressure application mechanism. In this process, the catalyst layers of the catalyst transfer sheets 20A and 20B are transferred to the upper and the lower surfaces of the polymer electrolyte membrane 10.

In this embodiment, the preliminary pressure application section and the heated pressure application section are constituted as an integral double belt pressure application mechanism, and accordingly, the pressure is not liberated between the heated pressure application step and the cooled pressure application step. In other words, in this embodiment, the preliminary pressure application step and the heated pressure application step are continuously conducted in the same double belt pressure application mechanism while the pressure application to the polymer electrolyte membrane and the catalyst transfer sheet are retained.

### [Third embodiment]

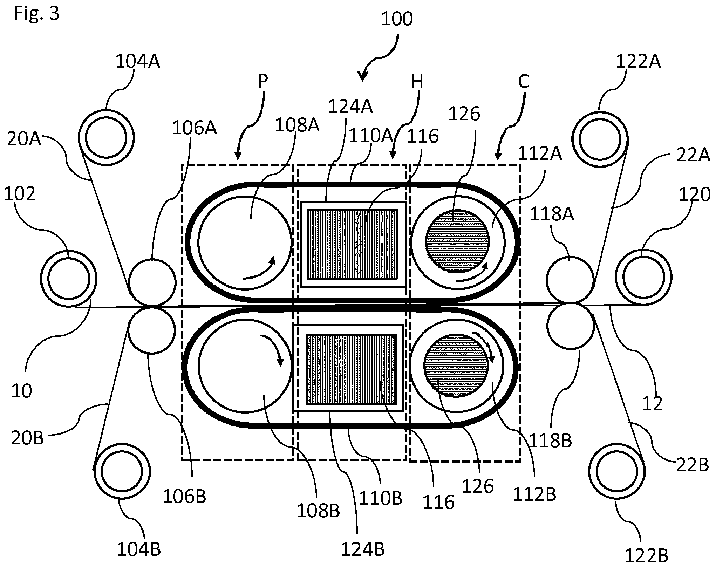

Next, CCM production device 100 according to the third embodiment shown in FIG. 3 and production method of the CCM using this device are described by featuring the difference from the CCM production device shown in FIG. 2. The method for producing the CCM according to the third embodiment further comprises the cooled pressure application step wherein the assembly assembled in the heated pressure application step (the CCM) is continuously subjected to pressure application with cooling.

In the CCM production device 100 shown in FIG. 3, since neither one of the drums 108A and the 108B have heating means, the polymer electrolyte membrane 10 and the catalyst transfer sheets 20A and 20B will be continuously subjected to pressure application by surface contact without heating while they pass between the drums 108A and the 108B, being sandwiched between the upper belt mechanism and the lower belt mechanism with the force applied from both upper and lower direction. They are thereby provisionally secured. Accordingly, in this embodiment, the preliminary pressure application section P is constituted from a part of the double belt pressure application mechanism, and more particularly, from a pair of drums 108A and 108B without a heating means and the conveyer belts 110A and 110B.

In this embodiment, the heating means 116 is provided in the pressure application sections 124A and 124B. Accordingly, the provisionally secured polymer electrolyte membrane 10 and the catalyst transfer sheets 20A and 20B are conveyed with the pressure being applied by the double belt pressure application mechanism, and they continuously receive the pressure by surface contact with the heating to a temperature not below the electrolyte membrane-denaturing temperature during their passage between the drum 108A and the drum 108B to their arrival to the gap between the drum 112A and the drum 112B. In other words, in this embodiment, the heated pressure application section H comprises the pressure application sections 124A and 124B equipped with the heating means and the conveyer belts 110A and 110B which are a part of the double belt pressure application mechanism. In this process, the catalyst layers of the catalyst transfer sheets 20A and 20B are transferred to the upper and the lower surfaces of the polymer electrolyte membrane 10.

The CCM 12 which passed heated pressure application section H and the residual substrates 22A and 22B are further conveyed with the pressure being applied by the double belt pressure application mechanism, and they are conveyed to the gap between the drum 112A and the drum 112B. In this embodiment, the drum 112A and 112B are respectively provided with a cooling means 126, and accordingly, the CCM 12 and the substrates 22A and 22B are continuously subjected to pressure application by surface contact with the cooling to a temperature below the electrolyte membrane-denaturing temperature while they pass between the drums 112A and 112B being sandwiched between the upper belt mechanism and the lower belt mechanism with the force applied from both upper and lower direction. In other words, the cooled pressure application section C comprises a pair of drums 112A and 112B provided with the cooling means 126 and the conveyer belts 110A and 110B which are a part of the double belt pressure application mechanism.

The temperature of the CCM immediately after passing the cooled pressure application section should be adequately set depending on properties of the polymer electrolyte membrane and the catalyst layer as long as it is a temperature below the electrolyte membrane-denaturing temperature, and a temperature below the temperature in the heated pressure application section H as described below. Preferably, the temperature is at least 5°C and less than 100°C. Use of a temperature of less than 100°C enables efficient suppression of the CCM warping while use of a temperature of less than 5°C may invite interfacial peeling between the catalyst layer and the polymer electrolyte membrane. The temperature of the CCM immediately after passing the cooled pressure application section is preferably at least 20°C and up to 80°C. In addition, in the cooled pressure application section, the temperature of the CCM immediately after the completion of the heated pressure application step is preferably reduced by 40°C to 120°C, and more preferably by 60°C to 100°C.

In this embodiment, the preliminary pressure application section, the heated pressure application section, and the cooled pressure application step are constituted as an integral double belt pressure application mechanism, and accordingly, the pressure is not liberated between the preliminary pressure application step and the heated pressure application step and between the heated pressure application step and the cooled pressure application step. In other words, in this embodiment, the preliminary pressure application step, the heated pressure application step, and the cooled pressure application step are continuously conducted in the same double belt pressure application mechanism while the pressure application to the polymer electrolyte membrane and the catalyst transfer sheet are retained.

In this embodiment, not only the polymer electrolyte membrane 10 but also the conveyer belts 110A and 110B are cooled when they move along the periphery of the drums 112A and 112B. As a consequence, the heat will have been sufficiently removed from the conveyer belts 110A and 110B by the time they again move along the drums 108A and 108B, and in the preliminary pressure application section P, the conveyer belts 110A and 110B will have been sufficiently cooled to a temperature less than the electrolyte membrane-denaturing temperature.

### [Fourth embodiment]

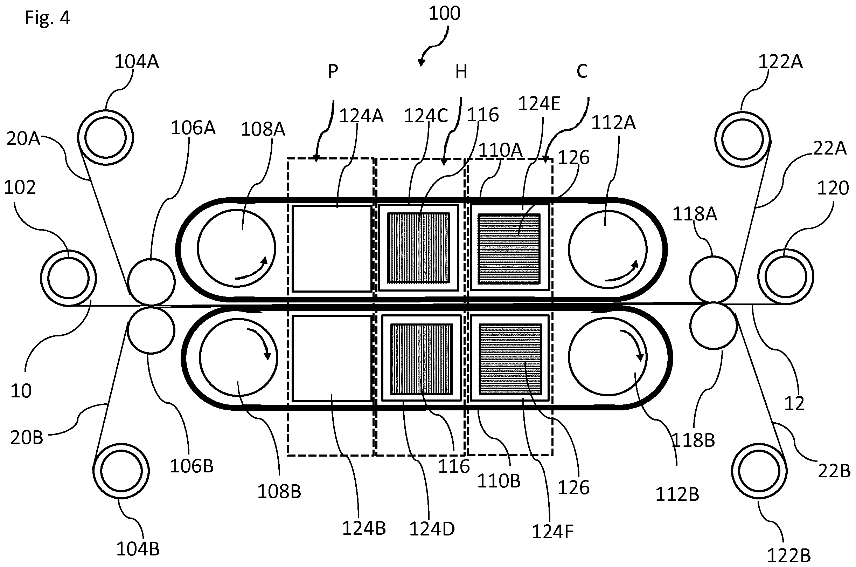

Next, CCM production device 100 according to the fourth embodiment shown in FIG. 4 and production method of the CCM using this device are described by featuring the difference from the CCM production device shown in FIG. 3.

In the CCM production device 100 shown in FIG. 4, the polymer electrolyte membrane 10 and the catalyst transfer sheets 20A and 20B which have been positioned with each other by the guide rollers 106A and 106B and which are in contact with each other are conveyed to the double belt pressure application mechanism constituted from an upper belt mechanism having a conveyer belt 110A circulating around two drums 108A and 112A and a lower belt mechanism having conveyer belt 110B circulating around two drums 108B and 112B, the lower belt mechanism being arranged under the upper belt mechanism to face against the upper belt mechanism.

The CCM production device 100 according to this embodiment has pressure application sections 124A, 124C, and 124E in this order between the drum 108A and the drum 112A as a part of the upper belt mechanism, and similarly, pressure application sections 124B, 124D, and 124F in this order as a part of the lower belt mechanism. The pressure application sections 124A, 124C, and 124E press the conveyer belt 110A in the downward direction, and the pressure application sections 124B, 124D, and 124F press the conveyer belt 110B in the upward direction. In the meanwhile, in this embodiment, the drums 108A, 108B, 112A, and 112B are not applying the pressure to the conveyer belts, and these drums function solely as the drive mechanism for circulating the conveyer belts 110A and 110B. However, the embodiment may also be constituted so that these drums would apply pressure to the conveyer belt as in the case of the embodiment as described above.

The pressure application sections 124A and 124B are not provided with the heating means. The polymer electrolyte membrane 10 and the catalyst transfer sheets 20A and 20B will be continuously subjected to pressure application by surface contact when they pass between the pressure application sections 124A and 124B, being sandwiched between the upper belt mechanism and the lower belt mechanism with the force applied from both upper and lower direction. Accordingly, in this embodiment, the preliminary pressure application section P comprises the pressure application sections 124A and 124B and the conveyer belts 110A and 110B which are a part of the double belt pressure application mechanism. The polymer electrolyte membrane 10 and the catalyst transfer sheets 20A and 20B are provisionally secured by passing through this preliminary pressure application section P. It is to be noted that the pressure application sections 124A and 124B may be provided with a heating means, and in such a case, the heating means should be turned off or set at a temperature below the electrolyte membrane-denaturing temperature.

Next, the provisionally secured polymer electrolyte membrane 10 and the catalyst transfer sheets 20A and 20B are conveyed with the pressure being applied by the double belt pressure application mechanism, and they arrive at the gap between the pressure application section 124C and the pressure application section 124D which are both provided with the heating means 116. Accordingly, during the passage between the pressure application section 124C and the pressure application section 124D, the polymer electrolyte membrane 10 and the catalyst transfer sheets 20A and 20B continuously receive a pressure by surface contact with the heating to a temperature not below the electrolyte membrane-denaturing temperature, being sandwiched between the upper belt mechanism and the lower belt mechanism with the force applied from both upper and lower direction. In other words, in this embodiment, the heated pressure application section H comprises a pair of pressure application sections 124C and 124D equipped with the heating means and the conveyer belts 110A and 110B which are a part of the double belt pressure application mechanism. In this process, the catalyst layers of the catalyst transfer sheets 20A and 20B are transferred to the upper and the lower surfaces of the polymer electrolyte membrane 10.

The CCM 12 which passed the heated pressure application section H and the residual substrates 22A and 22B are further conveyed with the pressure being applied by the double belt pressure application mechanism, and arrived to the gap between the pressure application section 124E and the pressure application section 124F. In this embodiment, the pressure application section 124E and the pressure application section 124F are respectively provided with the cooling means 126. Accordingly, the CCM 12 and the substrates 22A and 22B are continuously subjected to pressure application by surface contact with the cooling to a temperature below the electrolyte membrane-denaturing temperature while they pass between the pressure application section 124E and the pressure application section 124F being sandwiched between the upper belt mechanism and the lower belt mechanism with the force applied from both upper and lower direction. In other words, in this embodiment, the cooled pressure application section C comprises the pressure application section 124E and the pressure application section 124F provided with the cooling means 126 and the conveyer belts 110A and 110B which are a part of the double belt pressure application mechanism.

In this embodiment, the preliminary pressure application section, the heated pressure application section, and the cooled pressure application section are constituted as an integral double belt pressure application mechanism, and accordingly, the pressure is not removed between the preliminary pressure application step and the heated pressure application step and between the heated pressure application step and the cooled pressure application step. In other words, in this embodiment, the preliminary pressure application step, the heated pressure application step, and the cooled pressure application step are continuously conducted in the same double belt pressure application mechanism while the pressure application to the polymer electrolyte membrane and the catalyst transfer sheet are retained in the same double belt pressure application mechanism.

The cooling in the cooled pressure application step is not particularly limited as long as it is an operation that reduces the temperature of the CCM that has passed the heated pressure application step. Examples of the cooling means used include cooling device using a cooling medium such as compressed air, water, or alcohol. However, the case having no such means for intentionally reducing the temperature is also regarded as the cooling means as long as the absence of the heating means results in the reduced temperature of the CCM after the completion of the heated pressure application step. The conveyer belt and the like in the double belt pressure application mechanism constituting the cooled pressure application section C is preferably formed from a material having a high thermal capacity and thermal conductivity such as copper and stainless steel.

### <Production method and production device of the MEA>

Another embodiment of the present invention is a production method and a production device of the membrane-electrode assembly (MEA) wherein a catalyst layer and a gas diffusion layer are formed on opposite sides of the polymer electrolyte membrane in this order. In this embodiment, the recipient sheet including a polymer electrolyte membrane is a polymers electrolyte membrane itself or a catalyst coated electrolyte membrane (CCM), and the assembling layer assembled with the recipient sheet is a gas diffusion electrode (GDE) or a gas diffusion layer (GDL) . The assembling sheet is a GDE or a GDL itself when supplied without the substrate, and a GDE or GDL supported by a substrate when supplied with the substrate.

The MEA can be produced by a method wherein a CCM and a GDL are assembled by pressing or by a method wherein a polymer electrolyte membrane and a GDE are assembled by pressing. In the following description, the CCM and the polymer electrolyte membrane are generally referred to as the "electrolyte sheet" and the GDL and the GDE are generally referred to as the "gas diffusion sheet".

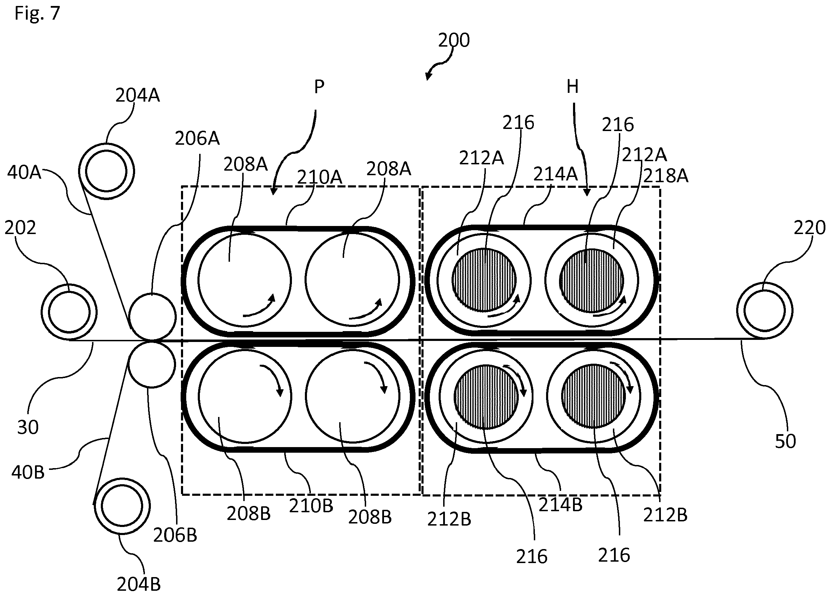

The constitution of the MEA production device 200 shown in FIG. 7 is the same as the CCM production device shown in FIG. 1 except that the substrate-winding rollers are absent in this constitution since the gas diffusion sheets 40A and 40B are independently supplied without being attached to a substrate or the like.

In the production of the MEA, the first step conducted is the preliminary pressure application step wherein the pressure is continuously applied to the electrolyte sheet and the gas diffusion sheet while these sheets are in contact with each other.

In the MEA production device 200 shown FIG. 7, the preliminary pressure application step is conducted as described below.

First, an electrolyte sheet 30 is unwound from an electrolyte sheet-supplying roller 202 to supply the electrolyte sheet 30. The gas diffusion sheet-supplying rollers 204A and 204B are respectively provided on the upper side and the lower side of the unwound electrolyte sheet 30. A gas diffusion sheet 40A to be assembled with the upper surface of the electrolyte sheet 30 is wound out and supplied from the gas diffusion sheet-supplying roller 204A, and a gas diffusion sheet 40B for assembling with the lower surface of the electrolyte sheet 30 is wound out and supplied from the gas diffusion sheet-supplying roller 204B so that they face with the electrolyte sheet 30. It is to be noted that, when the gas diffusion sheets 40A and 40B are GDE, the surface of the catalyst layer formation would face the electrolyte sheet (polymer electrolyte membrane) 30.

The thus supplied electrolyte sheet 30 and the gas diffusion sheets 40A and 40B pass between guide rollers 206A and 206B, and the guide roller 206A and 206B convey the supplied electrolyte sheet 30 and the gas diffusion sheets 40A and 40B by their rotation while sandwiching them in between. Positioning of the electrolyte sheet 30 and the gas diffusion sheets 40A and 40B is accomplished in this stage with the gas diffusion sheet 40A contacting the upper surface of the electrolyte sheet 30 and the gas diffusion sheet 40B contacting the lower surface of the electrolyte sheet 30.

The thus positioned electrolyte sheet 30 and the gas diffusion sheets 40A and 40B in contact with each other are conveyed to the preliminary pressure application section P. In this embodiment, the preliminary pressure application section P is a double belt pressure application mechanism constituted from an upper belt mechanism having conveyer belt 210A circulating around two drums 208A and a lower belt mechanism having conveyer belt 210B circulating around two drums 208B, the lower belt mechanism being arranged under the upper belt mechanism to face against the upper belt mechanism. The electrolyte sheet 30 and the gas diffusion sheets 40A and 40B sandwiched between the upper belt mechanism and the lower belt mechanism are conveyed with the force being applied from the upper and lower sides, and the pressure is continuously applied by surface contact and they become provisionally fixed.

Since neither one of the upper belt mechanism and the lower belt mechanism have heating means, pressure application in the preliminary pressure application section P will be conducted at a temperature below the pressure application in the heated pressure application section H. It is to be noted that, in this embodiment, the double belt pressure application mechanism in the heated pressure application section P has no heating means. However, this section may have a heating means for heating to electrolyte membrane-denaturing temperature, namely, a temperature below the Tg or HDT of the polymer electrolyte membrane included in the electrolyte sheet 30.

When a heat not below the electrolyte membrane-denaturing temperature is applied to the electrolyte sheet and the gas diffusion sheet before their provisional securing by the preliminary pressure application, wrinkles are generated in the electrolyte sheet, and this results in the loss of the quality of the of the MEA. The wrinkles of the electrolyte sheet results in the defect sites of the MEA, and hence, in the reduced durability of the MEA.

Temperature of the electrolyte sheet and the gas diffusion sheets during passage through the preliminary pressure application section should be adequately set depending on the properties of the polymer electrolyte membrane and the catalyst layer used, as long as it is a temperature below the electrolyte membrane-denaturing temperature, and a temperature below the temperature in the heated pressure application section H as described below. Typically, the temperature is preferably at least 5°C and less than 60°C. When this temperature is at least 60°C, the surface of the electrolyte sheet 30 will dry simultaneously with the pressure application and wrinkle generation is likely to be accelerated. In the meanwhile, when the temperature is less than 5°C, surface flexibility of the electrolyte sheet will be lost, and the boundary between the electrolyte sheet and the catalyst layer will be disturbed. Accordingly, the temperature of the electrolyte sheet and the gas diffusion sheets upon passage through the preliminary pressure application section is preferably at least 20°C and less than 60°C. In the preliminary pressure application section, it is also preferable that the temperature change compared with the temperature of the electrolyte sheet before its entrance into the preliminary pressure application section is preferably up to 30°C. In addition, the temperature elevation rate of the electrolyte sheet and the gas diffusion sheet in the preliminary pressure application step is preferably controlled as described above.

Next, the electrolyte sheet and the gas diffusion sheets that had passed the preliminary pressure application step are subjected to the heated pressure application step wherein the pressure is continuously applied with heating. In the MEA production device 200 according to the embodiment shown in FIG. 7, the heated pressure application step is conducted as described below.

The electrolyte sheet 30 and the gas diffusion sheets 40A and 40B which are provisionally secured in the preliminary pressure application section P are conveyed on the line to the heated pressure application section H. In the present embodiment, the heated pressure application section H is constituted from the double belt pressure application mechanism comprising an upper belt mechanism having a conveyer belt 214A circulating around two drums 212A, and a lower belt mechanism having a conveyer belt 214B circulating around two drums 212B, the lower belt mechanism being arranged under the upper belt mechanism to face against the upper belt mechanism.

The difference of this double belt pressure application mechanism with that of the preliminary pressure application section P is that the drums 212A and 212B have a heating means 216. The provisionally secured electrolyte sheet 30 and the gas diffusion sheets 40A and 40B are not only subjected to the continuous pressure by the upper belt mechanism and lower belt mechanism through surface contact, but they are also subjected to the heat from the heating means 216. In this process, the gas diffusion sheets 40A and 40B are respectively transferred to the upper and the lower surfaces of the electrolyte sheet 30. In other words, the electrolyte sheet 30 and the gas diffusion sheets 40A and 40B that had passed the heated pressure application section H becomes the membrane-electrode assembly (MEA) 50.

The heating means used may be the same as the one as described above for the CCM production device.

The maximum temperature of the electrolyte sheet passing through the heated pressure application section is preferably at least 100°C and up to 200°C. When this temperature is less than 100°C, the assembly may become insufficient. On the other hand, the maximum temperature in excess of 200°C may invite damages of the electrolyte sheet by the heat. The temperature of the electrolyte sheet immediately after passing the heated pressure application section is preferably at least 120°C and up to 180°C.

After passing the heated pressure application section H, the MEA 50 is wound up in the form of a roll by a MEA winding roller 220.

In the case of the MEA production device 200 of FIG. 7, the gas diffusion layers 40A and 40B are supplied by themselves without being disposed on the substrate, and the device is not provided with the substrate-winding rollers. However, the gas diffusion layer may be supplied by disposing on the substrate, and in such a case, substrate-winding rollers are provided on the MEA production device so that the substrates remaining after the assembling of the gas diffusion layers on the electrolyte membrane would be wound up on the substrate-winding rollers.

As readily understood from the foregoing, the production method and the production device of the MEA according to this embodiment may be modified as in the case of the CCM production device. In particular, the embodiment including the cooled pressure application section wherein the pressure is continuously applied with cooling to the assembly that had been assembled in the heated pressure application section is a preferable embodiment also in the case of the MEA production device, and the embodiment wherein the preliminary pressure application section, the heated pressure application section, and the cooled pressure application section constitute a part of the integral double belt pressure application mechanism is a particularly preferable embodiment.

### Examples

Next, the present invention is described in further detail by referring to Examples which by no means limit the scope of the invention. The physical properties are measured under the conditions as described below.

### (Measurement Example 1) Evaluation of high-temperature low-humidity electric generation (electric generation performance)

The membrane-electrode assembly prepared by the method described in Examples was placed in JARI Standard Cell "Ex-1" manufactured by EIWA Corporation (electrode area, 25 cm²) to prepare an electric generation-evaluating module. The electric generation was evaluated under the conditions as described below and the electric current was swept from 0 A/cm² to 1.2 A/cm² until the voltage was up to 0.1 V. In the present invention, the voltage at the current density of 1 A/cm².hour was compared. It is to be noted a pressure of 0.7 GPa was applied in the setting of the membrane-electrode assembly in the cell.
Electronic load system: electronic load system "PLZ664WA" manufactured by Kikusui Electronics Corp.
Cell temperature: kept at 80°C.
Gas humidification conditions: both the anode and the cathode were kept at a relative humidity of 30%.
Gas utilization rate: the anode, 70% of the stoichiometric amount; the cathode, 40% of the stoichiometric amount.

### (Measurement Example 2) Dry-wet cycle test (durability)

The membrane was allowed to experience dry-wet cycles in the actual electric generating conditions to gain general index of the mechanical durability and chemical durability. A larger number of cycles indicates higher mechanical and chemical durability of the member.

The electric generation-evaluating module was as in the case of the Measurement Example 1, and the start and the stop were repeated by the following conditions, and the number of cycles until the voltage at the start became less than 0.2 V or the open circuit voltage at the stop became less than 0.8 V was evaluated.
Electronic load system: electronic load system "PLZ664WA" manufactured by Kikusui Electronics Corp.
Cell temperature: kept at 80°C.
Gas humidification conditions: both the anode and the cathode were kept at a relative humidity of 50%.
Gas supplied at the start: the anode was hydrogen, and the cathode was air.
Current loaded at the start: 1 A/cm².
Gas utilization rate at the start: the anode, 70% of the stoichiometric amount; the cathode, 40% of the stoichiometric amount.
Start time: 3 minutes.
Gas flow rate at the stop: the anode hydrogen was at 0.25 L/min, and the cathode air was at 1 L/min.
Stop time: 3 minutes.
Start/stop switching: at these timings, dry nitrogen was supplied to the anode and dry air was supplied to the cathode at 1 L/min for 1 minute for the drying of the electrolyte membrane.

### (Measurement Example 3) Quality assessment of CCM and MEA

The CCM was evaluated "good" when the wrinkles were recognized on the surface by visual confirmation, "poor" when the wrinkles were confirmed. The MEA was evaluated "good" when the warping of the MEA was not recognized by visual confirmation, and "poor" when the warping of the MEA was recognized.

The CCM and the MEA were also cut out in the size of 50 mm x 50 mm, allowed to stand in the environment of room temperature (25°C) and a relative humidity of 60% for 30 minutes, and evaluated for the wrinkle height (the maximum value minus the minimum value) by using a tabletop 3D measuring device 3D-Eye scanner, standard type (blue laser, light section method) manufactured by OPTEX FA Co. Ltd. under the following conditions. 5 levels were measured at arbitrarily selected positions in the same sample, and average of 3 levels after removing the maximum value and the minimum value was calculated for use as the wrinkle height.
Scanning width: 14.5 mm
Scanning length: 30.0 mm
Scanning speed: 10 mm/second
Measurement resolution: X axis, 10 µm; Y axis, 9.5 µm; Z axis, 0.84 µm.

### [Synthesis Example 1: Synthesis of polyetherketone polymer electrolyte membrane from the polymer represented by the following formula]

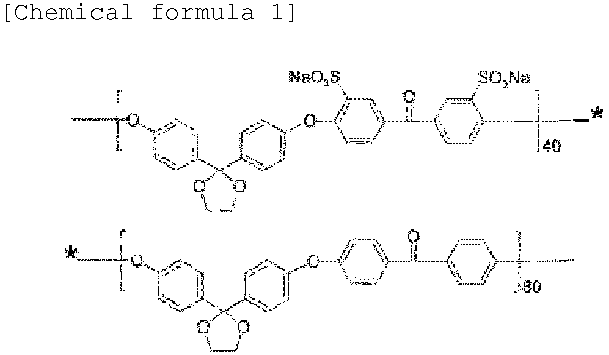

First, 2,2-bis(4-hydroxyphenyl)-1,3-dioxolane (K-DHBP) represented by the following formula was synthesized.

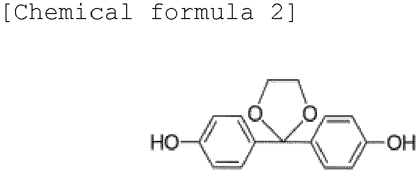

49.5 g of 4,4'-dihydroxybenzophenone, 134 g of ethylene glycol, 96.9 g of trimethyl o-formate, and 0.50 g of p-toluenesulfonic acid monohydrate were charged in a 500 ml flask equipped with an agitator, a thermometer, and a distillation tube for dissolution. The mixture was then kept at 78 to 82°C for 2 hours with stirring. Internal temperature was gradually elevated to 120°C until distillation of the methyl formate, methanol, and trimethyl o-formate completely stopped. After cooling the reaction mixture to room temperature, the mixture was diluted with ethyl acetate, and the organic layer was washed with 100 ml of 5% aqueous solution of potassium carbonate for separation. After removing the solvent, 80 ml of dichloromethane was added to the residue to precipitate the crystals. After filtration and drying, 52.0 g of 2,2-bis(4-hydroxyphenyl)-1,3-dioxolane was obtained. When this crystal was analyzed by GC, the crystals contained 99.8% of 2,2-bis(4-hydroxyphenyl)-1,3-dioxolane and 0.2% of 4,4'-dihydroxybenzophenone.

Next, disodium 3,3'-disulfonate-4,4'-difluorobenzophenone represented by the following formula was synthesized.

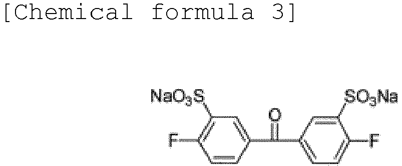

109.1 g of 4,4'-difluorobenzophenone (reagent manufactured by Aldrich) was reacted in 150 ml of fuming sulfuric acid (50% SO₃) (reagent manufactured by Wako Pure Chemical Industries) at 100°C for 10 hours, and reaction product was incrementally introduced in a large amount of water. After neutralization with NaOH, 200 g of sodium chloride was added to precipitate the synthesized product. The resulting precipitate was separated by filtration and recrystallized with aqueous ethanol solution to obtain disodium 3,3'-disulfonate-4,4'-difluorobenzophenone with the purity of 99.3%. The structure was confirmed with ¹H-NMR. The impurities were quantitatively analyzed by capillary electrophoresis (organic substance) and ion chromatography (inorganic substance).

Next, polymerization was conducted by using 6.91 g of potassium carbonate, 7.30 g of disodium 3,3'-disulfonate-4,4'-difluorobenzophenone, 10.3 g of 2,2-bis(4-hydroxyphenyl)-1,3-dioxolane, and 5.24 g of 4,4'-difluorobenzophenone in N-methyl pyrrolidone (NMP) at 210°C.

25% by weight solution of the resulting polymer in N-methyl pyrrolidone (NMP) was filtered under pressure by using a glass fiber filter and coated on a PET film by casting. After drying at 100°C for 4 hours, heat treatment was conducted in nitrogen atmosphere at 150°C for 10 minutes to obtain polyketal ketone membrane. The polymer had a very high solubility. The polymer was then immersed in 10% by weight aqueous solution of sulfuric acid at 95°C for 24 hours for proton substitution and de-protection, and the resulting product was immersed in a largely excess amount of pure water for 24 hours for sufficient washing to thereby obtain the polymer electrolyte membrane.

### [Reference Example 1-1]

By using the device having the schematic constitution shown in FIG. 2, the catalytic layer of the catalyst transfer sheet was transferred to the polyetherketone polymer electrolyte membrane prepared in Synthesis Example 1 to prepare the CCM. The catalyst transfer sheet used was the one prepared by coating the PTFE sheet with a catalyst coating composition comprising Pt-loaded carbon catalyst TEC10E50E manufactured by Tanaka Kikinzoku Kogyo K.K. and "Nafion (Registered Trademark) " solution and drying the coated sheet (platinum loading weight, 0.3 mg/cm²). It should be noted that the device actually used was constituted so that the ratio of the passing distance of the preliminary pressure application section to the passing distance of the heated pressure application section was 1:1. With regard to the preliminary pressure application step, the system was constituted so that the average temperature elevation rate of the polymer electrolyte membrane passing through the preliminary pressure application section was 5°C/second, the pressure was 4.5 MPa, and the passing time was 20 seconds by solely operating the heating means 116 in the heated pressure application section 112A and 112B. The heated pressure application step was conducted so that the maximum measured temperature of the belts in the heated pressure application section and the polymer electrolyte membrane (CCM) passing through the heated pressure application section was 160°C, the pressure was 4.5 MPa, and the passing time was 10 seconds. When the thus prepared CCM was visually inspected according to Measurement Example 3, the polymer electrolyte membrane had no wrinkles.

Next, GDL ("TGP-H-060" manufactured by Toray Industries, Inc.) was assembled on opposite surfaces of the resulting CCM to prepare the MEA. The MEA was prepared by using the same device as the one used in preparing the CCM, and the conditions used were the same as those used in the preparation of the CCM except that, in FIG. 2, the CCM was supplied from the electrolyte membrane-supplying roller 102 and the GDL was supplied from the catalyst transfer sheet-supplying rollers 104A and 104B as the GDL without using the substrate.

When the thus prepared MEA was visually confirmed according to Measurement Example 3, the MEA had good quality. The wrinkles had a height of 0.35 mm. The electric generation performance measured according to Measurement Examples 1 and 2 was 0.38V, and the dry-wet cycle durability was 10, 000 cycles .

### [Example 1-2]

By using the device shown in FIG. 4, the catalytic layer of the catalyst transfer sheet was transferred to the polyetherketone polymer electrolyte membrane prepared in Synthesis Example 1 to prepare the CCM. The catalyst transfer sheet used was the one prepared by coating the PTFE sheet with a catalyst coating composition comprising Pt-loaded carbon catalyst TEC10E50E manufactured by Tanaka Kikinzoku Kogyo K.K. and "Nafion (Registered Trademark)" solution and drying the coated sheet (platinum loading weight, 0.3 mg/cm²). It should be noted that the device actually used was constituted so that the ratio of the passing distance of the preliminary pressure application section to the passing distance of the heated pressure application section to the passing distance of the cooled pressure application section was 1:1:6. With regard to the preliminary pressure application step, the system was constituted so that the average temperature elevation rate of the polymer electrolyte membrane passing through the preliminary pressure application section was 15°C/second, the pressure was 4.5 MPa, and the passing time was 20 seconds by solely operating the heating means 116 in the heated pressure application section 124C and 124D. The heated pressure application step was conducted so that the maximum measured temperature of the polymer electrolyte membrane (CCM) passing through the heated pressure application section was 160°C, the pressure was 4.5 MPa, and the passing time was 10 seconds. The cooled pressure application step was conducted so that the measured temperature of the CCM immediately after the completion of this step was 80°C, the pressure was 4.5 MPa, and the passing time was 60 seconds.

Next, GDL ("TGP-H-060" manufactured by Toray Industries, Inc.) was assembled on opposite surfaces of the resulting CCM to prepare the MEA. The MEA was prepared by using the same device as the one used in preparing the CCM, and the conditions used were the same as those used in the preparation of the CCM except that, in FIG. 4, the CCM was supplied from the electrolyte membrane-supplying roller 102 and the GDL was supplied from the catalyst transfer sheet-supplying rollers 104A and 104B as the GDL without using the substrate.

### [Reference Example 1-3]

CCM and MEA were prepared by repeating the procedure of Reference Example 1-1 except that Nafion (Registered Trademark) 211CS film (manufactured by DuPont) was used instead of the polymer electrolyte membrane prepared in Synthesis Example 1 for the polymer electrolyte membrane, and the maximum of the actually measured temperature of the polymer electrolyte membrane in the course of passing through the heated pressure application section was 150°C.

### [Example 1-4]

CCM and MEA were prepared by repeating the procedure of Example 1-2 except that Nafion (Registered Trademark) 211CS film (manufactured by DuPont) was used instead of the polymer electrolyte membrane prepared in Synthesis Example 1 for the polymer electrolyte membrane, and the maximum of the actually measured temperature of the polymer electrolyte membrane in the course of passing through the heated pressure application section was 150°C.

### [Comparative Example 1-1]

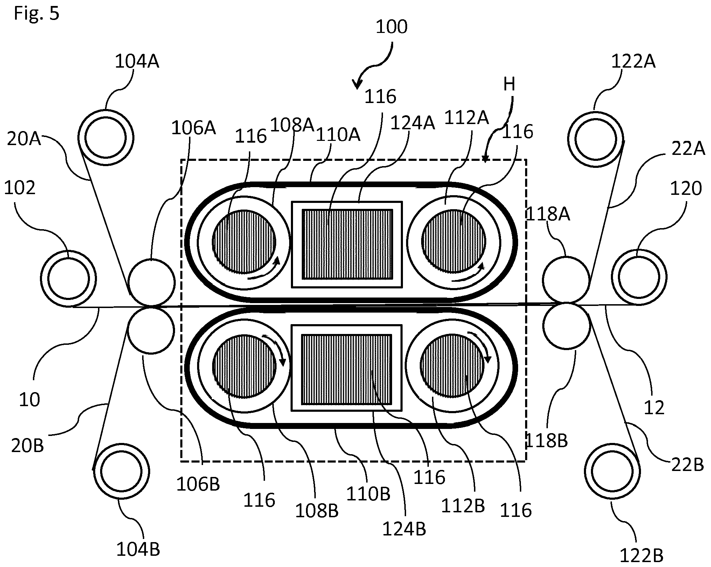

CCM and MEA were prepared by repeating the procedure of Reference Example 1-1 except that the device used was the one as shown in FIG. 5 which was the same as the one shown in FIG. 2 except that the drums 108A and 108B and the pressure application sections 124A and 124B had the heating means 116 adjusted as in the case of the drums 112A and 112B, and the preliminary pressure application step was not conducted. The numerals used in FIG. 5 were the same as those used in FIG. 2, and the explanation is omitted.

### [Comparative Example 1-2]

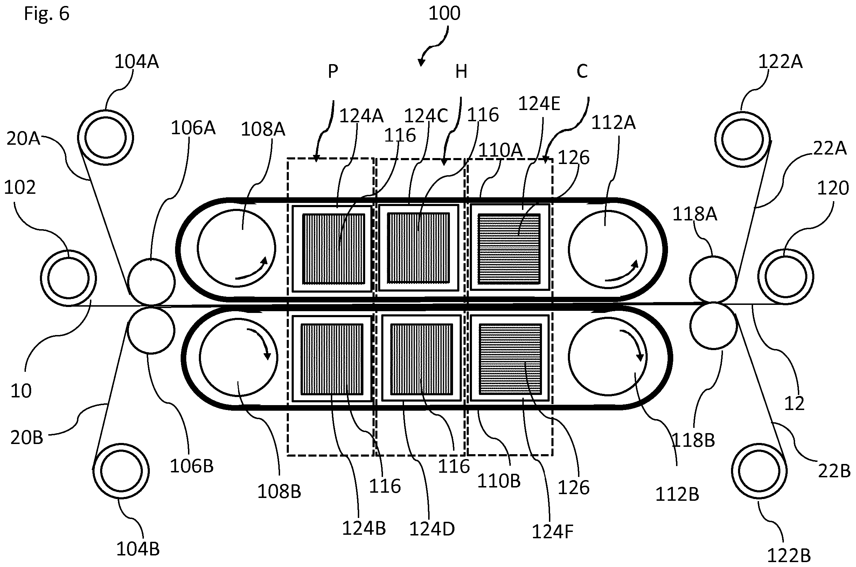

CCM and MEA were prepared by repeating the procedure of Example 1-2 except that the device used was the one as shown in FIG. 6 which was the same as the one shown in FIG. 4 except that the pressure application section 124A and 124B had the heating means 116 adjusted as in the case of the pressure application sections 124C and 124D, and the preliminary pressure application step was not conducted. The numerals used in FIG. 6 were the same as those used in FIG. 4, and the explanation is omitted.

### [Comparative Example 1-3]

CCM and MEA were prepared by repeating the procedure of Comparative Example 1-1 except that Nafion (Registered Trademark) 211CS film (manufactured by DuPont) was used instead of the polymer electrolyte membrane prepared in Synthesis Example 1 for the polymer electrolyte membrane, and the maximum of the actually measured temperature of the polymer electrolyte membrane in the course of passing through the heated pressure application section was 150°C.

### [Comparative Example 1-4]

CCM and MEA were prepared by repeating the procedure of Comparative Example 1-2 except that Nafion (Registered Trademark) 211CS film (manufactured by DuPont) was used instead of the polymer electrolyte membrane prepared in Synthesis Example 1 for the polymer electrolyte membrane, and the maximum of the actually measured temperature of the polymer electrolyte membrane in the course of passing through the heated pressure application section was 150°C.

The conditions used for the production in Examples, Reference Example, and Comparative Examples and the results of the evaluation for the CCM and the MEA are shown in Table 1.

**[Table 1]**

| | Polymer electrolyte membrane | Production conditions of CCM/MEA | | | Quality | | | Evaluation of battery performance | |
|---|---|---|---|---|---|---|---|---|---|
| | | Preliminary pressure application step | Heated pressure application step | Cooled pressure application step | CCM | MEA | Wrinkle height (mm) | Electric generation performance (V) | Durability (cycle) |
| Reference Example 1-1 | Synthesis Example 1 | 5°C/sec., 10 sec., 4.5 MPa | 160°C, 10 sec., 4.5 MPa | - | Good | Good | 0.35 | 0.38 | 10000 |
| Example 1-2 | Synthesis Example 1 | 15°C/sec., 10 sec., 4.5 MPa | 160°C, 10 sec., 4.5 MPa | 160°C→80°C, 60 sec., 4.5 MPa | Good | Good | 0.28 | 0.4 | 11000 |
| Reference Example 1-3 | Nafion 211CS | 5°C/sec., 10 sec., 4.5 MPa | 150°C, 10 sec., 4.5 MPa | - | Good | Good | 0.99 | 0.35 | 10000 |
| Example 1-4 | Nafion 211CS | 15°C/sec., 10 sec., 4.5 MPa | 150°C, 10 sec., 4.5 MPa | 150°C→80°C, 60 sec., 4.5 MPa | Good | Good | 0.86 | 0.35 | 11000 |
| Comparative Example 1-1 | Synthesis Example 1 | - | 160°C, 10 sec., 4.5 MPa | - | Poor | Poor | 3.51 | 0.3 | 3000 |
| Comparative Example 1-2 | Synthesis Example 1 | - | 160°C, 10 sec., 4.5 MPa | 160°C→80°C, 60 sec., 4.5 MPa | Poor | Poor | 3.12 | 0.3 | 3000 |
| Comparative Example 1-3 | Nafion 211CS | - | 150°C, 10 sec., 4.5 MPa | - | Poor | Poor | 4.5 | 0.3 | 1000 |
| Comparative Example 1-4 | Nafion 211CS | - | 150°C, 10 sec., 4.5 MPa | 150°C→80°C, 60 sec., 4.5 MPa | Poor | Poor | 3.86 | 0.3 | 1000 |

### [Reference Example 2-1]

By using the device that was the same as the one used in Reference Example 1-1, the polyetherketone polymer electrolyte membrane prepared in Synthesis Example 1 and the GDE were assembled to prepare the MEA. It is to be noted that the GDE was the one prepared by coating the "TGP-H-060" manufactured by Toray Industries, Inc. with a catalyst coating composition comprising Pt-loaded carbon catalyst TEC10E50E manufactured by Tanaka Kikinzoku Kogyo K.K. and "Nafion (Registered Trademark) " solution and drying the coated sheet (platinum loading weight, 0.3 mg/cm²). Conditions of the production device were the same as those of Reference Example 1-1.

### [Example 2-2]

By using the device that was the same as the one used in Example 1-2, the polyetherketone polymer electrolyte membrane prepared in Synthesis Example 1 and the GDE were assembled to prepare the MEA. It is to be noted that the GDE was the one prepared by coating the "TGP-H-060" manufactured by Toray Industries, Inc. with a catalyst coating composition comprising Pt-loaded carbon catalyst TEC10E50E manufactured by Tanaka Kikinzoku Kogyo K.K. and "Nafion (Registered Trademark) " solution and drying the coated sheet (platinum loading weight, 0.3 mg/cm²). The cooled pressure application step was conducted so that both the measured temperature of the belt and MEA immediately after the completion of the step was 80°C. Conditions of the production device were the same as those of Example 1-2.

### [Reference Example 2-3]

MEA was prepared by repeating the procedure of Reference Example 2-1 except that Nafion (Registered Trademark) 211CS film (manufactured by DuPont) was used instead of the polymer electrolyte membrane prepared in Synthesis Example 1 for the polymer electrolyte membrane, and the maximum of the actually measured temperature of the polymer electrolyte membrane in the course of passing through the heated pressure application section was 150°C.

### [Example 2-4]

MEA was prepared by repeating the procedure of Example 2-2 except that Nafion (Registered Trademark) 211CS film (manufactured by DuPont) was used instead of the polymer electrolyte membrane prepared in Synthesis Example 1 for the polymer electrolyte membrane, and the maximum of the actually measured temperature of the polymer electrolyte membrane in the course of passing through the heated pressure application section was 150°C.

### [Comparative Example 2-1]

MEA was prepared by repeating the procedure of Reference Example 2-1 except that the device used was the one as shown in FIG. 5 which was the same as the one shown in FIG. 2 except that the drums 108A and 108B and the pressure application sections 124A and 124B had the heating means 116 adjusted as in the case of the drums 112A and 112B, and the preliminary pressure application step was not conducted.

### [Comparative Example 2-2]

MEA was prepared by repeating the procedure of Example 2-2 except that the device used was the one as shown in FIG. 6 which was the same as the one shown in FIG. 4 except that the pressure application section 124A and 124B had the heating means 116 adjusted as in the case of the pressure application sections 124C and 124D, and the preliminary pressure application step was not conducted.

### [Comparative Example 2-3]

MEA was prepared by repeating the procedure of Comparative Example 2-1 except that Nafion (Registered Trademark) 211CS film (manufactured by DuPont) was used instead of the polymer electrolyte membrane prepared in Synthesis Example 1 for the polymer electrolyte membrane, and the maximum of the actually measured temperature of the polymer electrolyte membrane in the course of passing through the heated pressure application section was 150°C.

### [Comparative Example 2-4]

MEA was prepared by repeating the procedure of Comparative Example 2-2 except that Nafion (Registered Trademark) 211CS film (manufactured by DuPont) was used instead of the polymer electrolyte membrane prepared in Synthesis Example 1 for the polymer electrolyte membrane, and the maximum of the actually measured temperature of the polymer electrolyte membrane in the course of passing through the heated pressure application section was 150°C.

The conditions used for the production in Examples and Comparative Examples and the results of the evaluation for the CCM and the MEA are shown in Table 2.

**[Table 2]**

| | Polymer electrolyte membrane | Production conditions of CCM/MEA | | | Quality | Evaluation of battery performance | |
|---|---|---|---|---|---|---|---|
| | | Preliminary pressure application step | Heated pressure application step | Cooled pressure application step | MEA | Electric generation performance (V) | Durability (cycle) |
| Reference Example 2-1 | Synthesis Example 1 | 5°C/sec., 10 sec., 4.5 MPa | 160°C, 10 sec., 4.5 MPa | - | Good | 0.38 | 10000 |
| Example 2-2 | Synthesis Example 1 | 15°C/sec., 10 sec., 4.5 MPa | 160°C, 10 sec., 4.5 MPa | 160°C→80°C, 60 sec., 4.5 MPa | Good | 0.4 | 11000 |
| Reference Example 2-3 | Nafion 211CS | 5°C/sec., 10 sec., 4.5 MPa | 150°C, 10 sec., 4.5 MPa | - | Good | 0.35 | 10000 |
| Example 2-4 | Nafion 211CS | 15°C/sec., 10 sec., 4.5 MPa | 150°C, 10 sec., 4.5 MPa | 150°C→80°C, 60 sec., 4.5 MPa | Good | 0.35 | 11000 |
| Comparative Example 2-1 | Synthesis Example 1 | - | 160°C, 10 sec., 4.5 MPa | - | Poor | 0.3 | 3000 |
| Comparative Example 2-2 | Synthesis Example 1 | - | 160°C, 10 sec., 4.5 MPa | 160°C→80°C, 60 sec., 4.5 MPa | Poor | 0.3 | 3000 |
| Comparative Example 2-3 | Nafion 211CS | - | 150°C, 10 sec., 4.5 MPa | - | Poor | 0.3 | 1000 |
| Comparative Example 2-4 | Synthesis Example 1 | - | 150°C, 10 sec., 4.5 MPa | 150°C→80°C, 60 sec., 4.5 MPa | Poor | 0.3 | 1000 |

### Explanation of Numerals

10: polymer electrolyte membrane
12: CCM
20A, 20B: catalyst transfer sheet
22A, 22B: substrate
30: electrolyte sheet (polymer electrolyte membrane or CCM)
40: gas diffusion sheet (GDE or GDL)
50: MEA
100: CCM production device
102: electrolyte membrane-supplying roller
104A, 104B: catalyst transfer sheet-supplying roller
106A, 106B, 118A, 118B: guide roller
108A, 108B, 112A, 112B: drum
110A, 110B, 114A, 114B: conveyer belt
116: heating means
120: CCM winding roller
122A, 122B: substrate-winding roller
124A, 124B, 124C, 124D, 124E, 124F: pressure application section
126: cooling means
200: MEA production device
202: electrolyte sheet-supplying roller
204A, 204B: gas diffusion sheet-supplying roller
206A, 206B: guide roller
208A, 208B, 212A, 212B: drum
210A, 210B, 214A, 214B: conveyer belt
216: heating means
220: MEA winding roller

## Claims

1. A method for producing an assembly including a polymer electrolyte membrane comprising
a step of preliminary pressure application wherein a pressure is continuously applied to a recipient sheet including a polymer electrolyte membrane and an assembling sheet including an assembling layer, the recipient sheet and the assembling layer of the assembling sheet being in contact with each other, and
a step of heated pressure application wherein the recipient sheet and the assembling sheet after the preliminary pressure application step are subjected to continuous pressure application with heating,
wherein average temperature elevation rate of the recipient sheet and the assembling sheet in the preliminary pressure application step is up to 20°C/sec,
the method further comprising a step of pressure application with cooling wherein the assembly assembled in the heated pressure application step is continuously subjected to pressure application with cooling,
wherein the preliminary pressure application step, the heated pressure application step, and the cooled pressure application step are continuously conducted in one double belt pressure application mechanism.

2. A method for producing an assembly including a polymer electrolyte membrane according to claim 1 wherein the preliminary pressure application step and the heated pressure application step are continuously conducted with the recipient sheet and assembling sheet being subjected to the pressure application.

3. A method for producing an assembly including a polymer electrolyte membrane according to claim 2 wherein the pressure application in at least one of the preliminary pressure application step and the heated pressure application step is conducted by a double belt pressure application mechanism.

4. A method for producing an assembly including a polymer electrolyte membrane according to claim 3 wherein the preliminary pressure application step and the heated pressure application step are continuously conducted in one double belt pressure application mechanism.

5. A method for producing an assembly including a polymer electrolyte membrane according to any one of claims 1 to 4 wherein the recipient sheet is a polymer electrolyte membrane, and the assembling sheet is a catalyst transfer sheet, and the assembly including a polymer electrolyte membrane is a catalyst coated membrane.

6. A method for producing an assembly including a polymer electrolyte membrane according to any one of claims 1 to 4 wherein the recipient sheet is a polymer electrolyte membrane or a catalyst coated membrane, and the assembling sheet is a gas diffusion electrode or a gas diffusion layer, and the assembly is membrane-electrode assembly.

7. A method for producing an assembly including a polymer electrolyte membrane according to any one of claims 1 to 6 wherein an electrolyte membrane comprising an aromatic hydrocarbon polymer is used for the polymer electrolyte membrane.

8. A device for producing an assembly including a polymer electrolyte membrane comprising
a preliminary pressure application section capable of continuously applying a pressure to a recipient sheet including a polymer electrolyte membrane and an assembling sheet including an assembling layer which is to be assembled to at least one surface of the recipient sheet, the recipient sheet and the assembling layer of the assembling sheet being in contact with each other, and
a heated pressure application section, capable of subjecting the recipient sheet and the assembling sheet after the preliminary pressure application step to continuous pressure application with heating,
wherein average temperature elevation rate of the recipient sheet and the assembling sheet in the preliminary pressure application section is set at a rate of up to 20°C/sec,
the device further comprising a cooled pressure application section capable of continuously subjecting the assembly assembled in the heated pressure application step to pressure application with cooling,
wherein the preliminary pressure application section, the heated pressure application section, and the cooled pressure application section are respectively constituted as a part of an integral double belt pressure application mechanism.

9. A device for producing an assembly including a polymer electrolyte membrane according to claim 8 wherein the preliminary pressure application section and the heated pressure application section are respectively constituted as a part of an integral double belt pressure application mechanism.

## Patentansprüche

1. Verfahren zum Herstellen einer Anordnung mit einer Polymerelektrolytmembran umfassend
einen Schritt zum vorläufigen Druckausüben, wobei ein Druck kontinuierlich auf eine Aufnahmefolie, die eine Polymerelektrolytmembran aufweist, und eine Anordnungsfolie, die eine Anordnungsschicht aufweist, ausgeübt wird, wobei die Aufnahmefolie und die Anordnungsschicht der Anordnungsfolie in Kontakt miteinander stehen, und
einen Schritt zum Druckausüben mit Erwärmung, wobei die Aufnahmefolie und die Anordnungsfolie nach dem Schritt zum vorläufigen Druckausüben kontinuierlichem Druckausüben mit Erwärmung unterworfen werden,
wobei durchschnittliche Temperaturerhöhungsrate der Empfangsfolie und der Anordnungsfolie in dem Schritt zum vorläufigen Druckausüben bis zu 20°C/sec beträgt,
wobei das Verfahren ferner einen Schritt zum Druckausüben mit Kühlung aufweist, wobei die in dem Schritt zum Druckausüben mit Erwärmung angeordnete Anordnung kontinuierlich Druckausüben mit Kühlung unterworfen wird,
wobei der Schritt zum vorläufigen Druckausüben, der Schritt zum Druckausüben mit Erwärmung und der Schritt zum Druckausüben mit Kühlung kontinuierlich in einem Doppelband-Druckausübungsmechanismus durchgeführt werden.

2. Verfahren zum Herstellen einer Anordnung mit einer Polymerelektrolytmembran nach Anspruch 1, wobei der Schritt zum vorläufigen Druckausüben und der Schritt zum Druckausüben mit Erwärmung kontinuierlich durchgeführt werden, wobei die Aufnahmefolie und die Anordnungsfolie dem Druckausüben unterworfen werden.

3. Verfahren zum Herstellen einer Anordnung mit einer Polymerelektrolytmembran nach Anspruch 2, wobei das Druckausüben in mindestens einem der Schritte zum vorläufigen Druckausüben und zum Druckausüben mit Erwärmung durch einen Doppelband-Druckausübungsmechanismus durchgeführt wird.

4. Verfahren zum Herstellen einer Anordnung mit einer Polymerelektrolytmembran nach Anspruch 3, wobei der Schritt zum vorläufigen Druckausüben und der Schritt zum Druckausüben mit Erwärmung kontinuierlich in einem Doppelband-Druckausübungsmechanismus durchgeführt werden.

5. Verfahren zum Herstellen einer Anordnung mit einer Polymerelektrolytmembran nach einem der Ansprüche 1 bis 4, wobei die Aufnahmefolie eine Polymerelektrolytmembran ist und die Anordnungsfolie eine Katalysator-Umsetzfolie ist und die Anordnung mit einer Polymerelektrolytmembran eine katalysatorbeschichtete Membran ist.

6. Verfahren zum Herstellen einer Anordnung mit einer Polymerelektrolytmembran nach einem der Ansprüche 1 bis 4, wobei die Aufnahmefolie eine Polymerelektrolytmembran oder eine katalysatorbeschichtete Membran ist und die Anordnungsfolie eine Gasdiffusionselektrode oder eine Gasdiffusionsschicht ist und die Anordnung eine Membran-Elektroden-Anordnung ist.

7. Verfahren zum Herstellen einer Anordnung mit einer Polymerelektrolytmembran nach einem der Ansprüche 1 bis 6, wobei eine Elektrolytmembran, die ein aromatisches Kohlenwasserstoffpolymer aufweist, für die Polymerelektrolytmembran verwendet wird.

8. Vorrichtung zum Herstellen einer Anordnung mit einer Polymerelektrolytmembran, umfassend
einen Abschnitt zum vorläufigen Druckausüben, der in der Lage ist, kontinuierlich einen Druck auf eine Aufnahmefolie, die eine Polymerelektrolytmembran aufweist, und eine Anordnungsfolie, die eine Anordnungsschicht aufweist, die auf mindestens eine Oberfläche der Aufnahmefolie anzuordnen ist, zu verwenden, wobei die Aufnahmefolie und die Anordnungsschicht der Anordnungsfolie miteinander in Kontakt stehen, und
einen Abschnitt zum Druckausüben mit Erwärmung, der in der Lage ist, die Aufnahmefolie und die Anordnungsfolie nach dem Schritt zum vorläufigen Druckausüben kontinuierlichem Druckausüben mit Erwärmung zu unterwerfen,
wobei durchschnittliche Temperaturerhöhungsrate der Aufnahmefolie und der Anordnungsfolie im Abschnitt zum vorläufigen Druckausüben auf eine Rate von bis zu 20°C/sec eingestellt ist,
die Vorrichtung ferner einen Abschnitt zum Druckausüben mit Kühlung aufweist, der in der Lage ist, die in dem Schritt zum Druckausüben mit Erwärmung angeordnete Anordnung kontinuierlich Druckausüben mit Kühlung zu unterwerfen,
wobei der Abschnitt zum vorläufigen Druckausüben, der Abschnitt zum Druckausüben mit Erwärmung und der Abschnitt zum Druckausüben mit Kühlung jeweils als ein Abschnitt eines integralen Doppelband-Druckausübungsmechanismus vorgesehen sind.

9. Vorrichtung zum Herstellen einer Anordnung mit einer Polymerelektrolytmembran nach Anspruch 8, wobei der Abschnitt zum vorläufigen Druckausüben und der Abschnitt zum Druckausüben mit Erwärmung jeweils als ein Abschnitt eines integralen Doppelband-Druckausübungsmechanismus vorgesehen sind.

## Revendications

1. Procédé de production d'un ensemble comprenant une membrane électrolytique polymère comprenant
une étape d'application de pression préliminaire dans laquelle une pression est appliquée en continu sur une feuille réceptrice comprenant une membrane électrolytique polymère et une feuille d'assemblage comprenant une couche d'assemblage, la feuille réceptrice et la couche d'assemblage de la feuille d'assemblage étant en contact l'une avec l'autre, et
une étape d'application de pression avec chauffage dans laquelle la feuille réceptrice et la feuille d'assemblage après l'étape d'application de pression préliminaire sont soumises à une application de pression continue avec un chauffage,
dans lequel la vitesse d'élévation de température moyenne de la feuille réceptrice et de la feuille d'assemblage dans l'étape d'application de pression préliminaire va jusqu'à 20°C/s,
le procédé comprenant en outre une étape d'application de pression avec un refroidissement où l'ensemble assemblé dans l'étape d'application de pression avec chauffage est soumis en continu à une application de pression avec un refroidissement,
dans lequel l'étape d'application de pression préliminaire, l'étape d'application de pression avec chauffage et l'étape d'application de pression avec refroidissement sont réalisées en continu dans un mécanisme d'application de pression à double courroie.

2. Procédé de production d'un ensemble comprenant une membrane électrolytique polymère selon la revendication 1, dans lequel l'étape d'application de pression préliminaire et l'étape d'application de pression avec chauffage sont réalisées en continu avec la feuille réceptrice et la feuille d'assemblage soumises à l'application de pression.

3. Procédé de production d'un ensemble comprenant une membrane électrolytique polymère selon la revendication 2, dans lequel l'application de pression dans au moins l'une de l'étape d'application de pression préliminaire et de l'étape d'application de pression avec chauffage est réalisée par un mécanisme d'application de pression à double courroie.

4. Procédé de production d'un ensemble comprenant une membrane électrolytique polymère selon la revendication 3, dans lequel l'étape d'application de pression préliminaire et l'étape d'application de pression avec chauffage sont réalisées en continu dans un mécanisme d'application de pression à double courroie.

5. Procédé de production d'un ensemble comprenant une membrane électrolytique polymère selon l'une quelconque des revendications 1 à 4, dans lequel la feuille réceptrice est une membrane électrolytique polymère, et la feuille d'assemblage est une feuille de transfert de catalyseur, et l'ensemble comprenant une membrane électrolytique polymère est une membrane revêtue de catalyseur.

6. Procédé de production d'un ensemble comprenant une membrane électrolytique polymère selon l'une quelconque des revendications 1 à 4, dans lequel la feuille réceptrice est une membrane électrolytique polymère ou une membrane revêtue de catalyseur, et la feuille d'assemblage est une électrode à diffusion gazeuse ou une couche de diffusion gazeuse, et l'ensemble est un ensemble membrane-électrode.

7. Procédé de production d'un ensemble comprenant une membrane électrolytique polymère selon l'une quelconque des revendications 1 à 6, dans lequel une membrane électrolytique comprenant un polymère d'hydrocarbure aromatique est utilisée pour la membrane électrolytique polymère.

8. Dispositif de production d'un ensemble comprenant une membrane électrolytique polymère comprenant
une section d'application de pression préliminaire capable d'appliquer en continu une pression sur une feuille réceptrice comprenant une membrane électrolytique polymère et une feuille d'assemblage comprenant une couche d'assemblage qui doit être assemblée à au moins une surface de la feuille réceptrice, la feuille réceptrice et la couche d'assemblage de la feuille d'assemblage étant en contact l'une avec l'autre, et
une section d'application de pression avec chauffage, capable de soumettre la feuille réceptrice et la feuille d'assemblage après l'étape d'application de pression préliminaire à une application de pression continue avec un chauffage,
dans lequel la vitesse d'élévation de température moyenne de la feuille réceptrice et de la feuille d'assemblage dans la section d'application de pression préliminaire est réglée à une vitesse allant jusqu'à 20°C/s,
le dispositif comprenant en outre une section d'application de pression avec refroidissement capable de soumettre en continu l'ensemble assemblé dans l'étape d'application de pression avec chauffage à une application de pression avec un refroidissement,
dans lequel la section d'application de pression préliminaire, la section d'application de pression avec chauffage et la section d'application de pression avec refroidissement sont respectivement constituées en tant que partie d'un mécanisme d'application de pression à double courroie intégral.

9. Dispositif de production d'un ensemble comprenant une membrane électrolytique polymère selon la revendication 8, dans lequel la section d'application de pression préliminaire et la section d'application de pression avec chauffage sont respectivement constituées en tant que partie d'un mécanisme d'application de pression à double courroie intégral.
